# EUROPÄISCHE PATENTSCHRIFT

(11) **EP 2 535 754 B1**
(45) Veröffentlichungstag und Bekanntmachung des Hinweises auf die Patenterteilung: **06.08.2014**
(21) Anmeldenummer: 12171939.7
(22) Anmeldetag: 14.06.2012
(51) Int. Cl.: G02B 21/10, G02B 21/16, G02B 21/36, G02B 21/00

(54) **Abtastmikroskop und Verfahren zur lichtmikroskopischen Abbildung eines Objektes**
Sampling microscope and method for imaging an object using a light microscope
Microscope à balayage et procédé de représentation optique microscopique d'un objet

(30) Priorität: 14.06.2011 DE 102011051042
(43) Veröffentlichungstag der Anmeldung: 19.12.2012
(73) Patentinhaber: Leica Microsystems CMS GmbH, 35578 Wetzlar (DE)
(72) Erfinder: Knebel, Werner, 76709 Kronau (DE); Ulrich, Heinrich, 69121 Heidelberg (DE)
(74) Vertreter: Schaumburg, Thoenes, Thurn, Landskron, Eckert

(56) Entgegenhaltungen:
- WO-A1-2010/012980
- DE-A1-102008 018 476
- DE-A1-102009 044 987
- MIKE FRIEDRICH ET AL: "STED-SPIM: Stimulated Emission Depletion Improves Sheet Illumination Microscopy Resolution", BIOPHYSICAL JOURNAL, BIOPHYSICAL SOCIETY, US, Bd. 100, Nr. 8, 29. Dezember 2010 (2010-12-29), Seiten L43-L45, XP028192802, ISSN: 0006-3495, DOI: 10.1016/J.BPJ.2010.12.3748 [gefunden am 2011-03-09]

## Beschreibung

Die Erfindung betrifft ein Abtastmikroskop mit einer Lichtquelle zum Aussenden eines Beleuchtungslichtstrahls, einer Beleuchtungsoptik zum Erzeugen eines länglichen Beleuchtungsfokus in einem abzubildenden Objekt und einer Abtastvorrichtung zum Bewegen des Beleuchtungsfokus über einen zu beleuchtenden Zielbereich des abzubildenden Objektes durch Ändern der Einfallsrichtung, in der der Beleuchtungslichtstrahl in eine Eintrittspupille der Beleuchtungsoptik fällt.

Aus dem Stand der Technik sind Abtast- oder Scanmikroskope bekannt, die beispielsweise in der Fluoreszenzmikroskopie eingesetzt werden, um mit Laserlicht Farbstoffe zur Emission von Fluoreszenzstrahlung anzuregen, die dann zur Abbildung des zu untersuchenden Objektes von einem Detektor erfasst wird. Auf diesem Gebiet der Mikroskopie kommen insbesondere konfokale Abtastmikroskope zum Einsatz, die im Unterschied zu Standardmikroskopen zu einem bestimmten Zeitpunkt nicht das gesamte Objekt beleuchten, sondern einen in der Regel beugungsbegrenzten Lichtfleck erzeugen, mit dem das Objekt Punkt für Punkt abgetastet wird. Die von dem Detektor in den einzelnen Objektpunkten erfassten Lichtsignale werden dann zu einem Gesamtbild des Objektes zusammengefasst.

Ein solches Konfokalmikroskop weist üblicherweise einen sogenannten Punktscanner als Abtastvorrichtung auf, der den von der Lichtquelle abgegebenen Beleuchtungslichtstrahl in die Eintrittspupille der Beleuchtungsoptik lenkt. Die Beleuchtungsoptik formt den in ihre Eintrittspupille einfallenden Beleuchtungslichtstrahl in eine fokussierte Lichtverteilung um, die im Folgenden als Beleuchtungsfokus bezeichnet wird. Form und Größe des Beleuchtungsfokus hängen von den optischen Eigenschaften, insbesondere der numerischen Apertur der Beleuchtungsoptik ab. Fällt der Beleuchtungslichtstrahl mittig und senkrecht, d.h. längs der optischen Achse in die Eintrittspupille der Beleuchtungsoptik, so erzeugt Letztere einen länglichen Beleuchtungsfokus, dessen Ausdehnung quer zur optischen Achse kleiner als längs der optischen Achse ist. Der Beleuchtungsfokus wird dann zum Abtasten des Objektes quer zur optischen Achse bewegt, indem der Punktscanner beispielsweise über eine bewegliche Spiegelanordnung den Einfallswinkel ändert, unter dem der Beleuchtungslichtstrahl in die Eintrittspupille der Beleuchtungsoptik fällt.

Um mittels eines Konfokalmikroskops eine dreidimensionale Abbildung vorzunehmen, muss also das Objekt in oben beschriebener Weise punktweise abgetastet werden. Da dies vergleichsweise aufwendig ist, wurde in jüngerer Vergangenheit ein in der Literatur als SPIM (Selective Plane Illumination Microscopy) bezeichnetes Mikroskopierverfahren vorgeschlagen. Dieses Verfahren arbeitet mit einem Beleuchtungsobjektiv und einem Beobachtungsobjektiv, die unter einem Winkel von 90 Grad zueinander angeordnet sind. Das Beleuchtungsobjektiv erzeugt im Zusammenwirken mit einer ihm vorgeordneten Zylinderlinse eine näherungsweise ebene Beleuchtungslichtverteilung, die das Objekt längs der optischen Achse des Beleuchtungsobjektivs durchsetzt. Eine solche Lichtverteilung wird häufig auch als Lichtblatt oder Lichtscheibe bezeichnet. Der durch dieses Lichtblatt beleuchtete Zielbereich des Objektes wird durch das Beobachtungsobjektiv, dessen optische Achse senkrecht zu dem Lichtblatt verläuft, auf eine Detektionsfläche, z.B. ein CCD, abgebildet. Wird nun das Objekt durch das Lichtblatt bewegt, so können mit dieser Anordnung Schichtbilder des Objektes aufgenommen werden. Um ein möglichst dünnes Lichtblatt zu erzeugen, muss das Beleuchtungsobjektiv eine entsprechend hohe numerische Apertur aufweisen, wobei der freie Arbeitsabstand des Beleuchtungsobjektivs entsprechend groß sein muss, um eine Kollision mit dem Beobachtungsobjektiv zu vermeiden. Die numerische Apertur des Beleuchtungsobjektivs definiert demnach die Dicke des Lichtblattes und damit die optische Auflösung längs der optischen Achse des Beobachtungsobjektivs.

Ein Abtastmikroskope nach dem Oberbegriff des Anspruchs 1 ist aus der Druckschrift WO 2010/012980 A1 bekannt. Bei dem in dieser Druckschrift beschriebenen abgewandelten SPIM-Verfahren erfolgen Beleuchtung und Detektion mit ein und demselben Objektiv. Hierzu wird die Eintrittspupille des Objektivs dezentral unterleuchtet, d.h. der Beleuchtungslichtstrahl tritt durch einen Teil der Eintrittspupille, der quer zur optischen Achse versetzt ist. Eine vor dem Objektiv angeordnete Zylinderlinse erzeugt in dem Objekt ein beleuchtendes Lichtblatt, das zur optischen Achse des Objektivs schräg gestellt ist. Der durch dieses Lichtblatt beleuchtete Zielbereich wird dann wiederum durch das Objektiv abgebildet.

Die vorstehend beschriebenen Einrichtungen arbeiten jeweils mit einer Zylinderlinse, um die gewünschte Schrägbeleuchtung des Objektes zu erzielen. Die Verwendung einer solchen Zylinderlinse hat jedoch Nachteile. So sind diese Einrichtungen ausschließlich auf eine Schrägbeleuchtung mittels eines Lichtblattes ausgelegt und ermöglichen keine davon abweichende Anwendung, z.B. eine punktweise konfokale Abtastung. Auch wäre es wünschenswert, die räumliche Verteilung der Lichtintensität des zur Schrägbeleuchtung erzeugten Lichtblattes variieren zu können. Dies ist mit einer Zylinderlinse nicht möglich.

Zur weiterführenden Literatur wird ferner verwiesen auf A.H. Voie et al.: "Orthogonal-plane fluorescence optical sectioning: three-dimensional imaging of macroscopic biological specimens", Journal of Microscopy 170, 229-236 (1993); J. Huisken, J. Swoger, F. Del Bene, J. Wittbold, E. H. K. Stelzer: "Optical sectioning deep inside live embryos by selective plane illumination microscopy", Science 305, 1007 (2004); F. Fahrbach, A. Rohrbach: "Microscopy with non diffracting beams", FOM 2009, Krakau; C. Dunsby: "Optically sectioned imaging by oblique plane mirror microscopy", Optics Express Vol. 16, 25 (2008); DE 10 2005 027 077 A1; DE 44 16 558 C2; US 5 952 668; WO 2006/127692 A2; DE 10 2006 021 317 B3; WO 2007/128434 A1; US 2009/01354342 A1; DE 10 2008 024 568 A1; US 2008/0032414 A1.

Bei Verfahren, die mit einem Beleuchtungsobjektiv und einem separaten Beobachtungsobjektiv arbeiten, sind die beiden Objektive in der Regel in einem Winkel von 90 Grad zueinander angeordnet. Diese Anordnung der Objektive, bei der die Beleuchtungsachse und die Beobachtungsachse senkrecht zueinander liegen, kann bei der Abbildung bestimmter biologischer Objekte von Nachteil sein. Beispielsweise ist es häufig nicht möglich, sphärische Objekte unter einer solch rechtwinkligen Objektivanordnung kollisionsfrei zu platzieren. Solche sphärischen Objekte kommen beispielsweise zur Anwendung, wenn Gewebekulturen im Auge einer Maus oder einer Ratte zu untersuchen sind. Hier kommt es bei der herkömmlichen rechtwinkligen Objektivanordnung häufig zu Abschattungen durch umliegendes Gewebe.

Aufgabe der Erfindung ist es, ein Abtastmikroskop eingangs genannter Art so weiterzubilden, dass eine kollisionsfreie lichtmikroskopische Abbildung auch unter schwierigen geometrischen Verhältnissen möglich ist.

Die Erfindung löst diese Aufgabe dadurch, dass die Abtastvorrichtung den Beleuchtungslichtstrahl zum Schrägstellen des Beleuchtungsfokus relativ zur optischen Achse der Beleuchtungsoptik auf einen aus der Pupillenmitte versetzten Teilbereich der Eintrittspupille der Beleuchtungsoptik richtet und zum Bewegen des Beleuchtungsfokus über den zu beleuchtenden Zielbereich die Einfallsrichtung des Beleuchtungslichtstrahls innerhalb dieses Teilbereichs ändert, und ein von der Beleuchtungsoptik räumlich getrenntes Beobachtungsobjektiv vorgesehen, das mit seiner optischen Achse im Wesentlichen senkrecht zu dem beleuchteten Zielbereich und unter einem spitzen Winkel zur optischen Achse der Beleuchtungsoptik angeordnet ist.

Die Erfindung sieht zunächst vor, die Eintrittspupille der Beleuchtungsoptik mit dem Beleuchtungslichtstrahl dezentral zu unterleuchten, indem der Beleuchtungslichtstrahl auf einen aus der Pupillemitte versetzten Teilbereich der Eintrittspupille geleitet wird. Die Unterleuchtung der Eintrittspupille, d.h. die Maßnahme, den Beleuchtungslichtstrahl nicht die gesamte Fläche der Eintrittspupille durchsetzen zu lassen und damit nicht die volle Apertur zu nutzen, bewirkt eine Aufweitung des (von vorneherein länglichen) Beleuchtungsfokus sowohl in Längsrichtung als auch in Querrichtung. Da der Beleuchtungslichtstrahl zudem außermittig auf die Eintrittspupille fällt, wird der Beleuchtungsfokus relativ zur optischen Achse der Beleuchtungsoptik schräg gestellt.

Der in dieser Weise aufgeweitete und schräg gestellte Beleuchtungsfokus kann nun dazu genutzt werden, sequenziell ein den Zielbereich beleuchtendes Lichtblatt aufzubauen. Hierzu dient die Abtastvorrichtung, die für eine entsprechende Abtastbewegung des Beleuchtungslichtstrahls in der Eintrittspupille der Beleuchtungsoptik sorgt. Diese Abtastbewegung entspricht einem Verkippen des Beleuchtungslichtstrahls um einen Kipppunkt, der im Bereich der Eintrittspupille liegt. Dies bedeutet, dass der Beleuchtungslichtstrahl, der selbstredend kein Strahl im mathematischen Sinne, sondern vielmehr ein Bündel von Lichtstrahlen darstellt, im Bereich der Eintrittspupille (zumindest näherungsweise) ortsfest bleibt, während er in einem Abstand von der Eintrittspupille (in Richtung der Abtastvorrichtung) gleichsam eine Schwenkbewegung relativ zu einer parallel zur optischen Achse liegenden Referenzrichtung ausführt. Die Kipp- oder Schwenkbewegung des Beleuchtungslichtstrahls setzt die Beleuchtungsoptik in eine entsprechende Bewegung des schräg gestellten Beleuchtungsfokus quer zur optischen Achse um. Die tatsächliche Größe der Bewegung des Beleuchtungsfokus in dem Objekt hängt vom konkreten Aufbau der Beleuchtungsoptik ab. Wesentlich ist jedoch, dass die durch die Abtastvorrichtung bewirkte Verkippung des Beleuchtungslichtstrahls erfindungsgemäß dazu genutzt wird, den Beleuchtungsfokus innerhalb des Zielbereichs des Objektes zu bewegen und damit gleichsam ein Lichtblatt aufzubauen, das den Zielbereich beleuchtet.

Im Unterschied zu den aus dem Stand der Technik bekannten Lösungen, die zur Erzeugung eines Lichtblattes mit einer Zylinderlinse arbeiten, wird bei dem erfindungsgemäßen Abtastmikroskop das Lichtblatt mittels der Abtastvorrichtung sequentiell aufgebaut, indem der Beleuchtungsfokus innerhalb einer Abtastperiode über den Zielbereich bewegt wird. Hierzu kann die Abtastperiode, mit der die Abtastvorrichtung betrieben wird, so kurz eingestellt werden, dass sie den Detektionszyklus eines Lichtdetektors, auf den der Zielbereich durch die Beleuchtungsoptik abgebildet wird, deutlich unterschreitet. Der Lichtdetektor, z.B. ein Flächendetektor, CCD, CMOS, APD-Array oder dgl. "sieht" demnach den bewegten Beleuchtungsfokus zeitlich und damit räumlich nicht aufgelöst. Vielmehr sieht er eine zusammenhängende Lichtverteilung in Form des Lichtblattes.

Da in einem herkömmlichen konfokalen Abtastmikroskop ohnehin eine den Beleuchtungslichtstrahl bewegende Abtastvorrichtung vorgesehen ist, ermöglicht die Erfindung eine besonders effiziente Erzeugung des beleuchtenden Lichtblattes. Insbesondere ist es möglich, im Wesentlichen ein und denselben Mikroskopaufbau für unterschiedliche Applikationen vorzusehen. So ist es zur Realisierung der erfindungsgemäßen Applikation, bei der eine Schrägbeleuchtung des Objektes mittels eines Lichtblattes vorgenommen wird, lediglich erforderlich, in einem an sich standardmäßig aufgebauten konfokalen Abtastmikroskop für eine dezentrale Unterleuchtung der Eintrittspupille der Beleuchtungsoptik zu sorgen. Dies kann beispielsweise mittels eines optischen Elementes erfolgen, das in den Lichtweg des Beleuchtungslichtstrahls eingebracht wird. Soll das Abtastmikroskop anschließend wieder mit einer punktweisen Beleuchtung arbeiten, so muss das optische Element lediglich wieder aus dem Lichtweg des Beleuchtungslichtstrahls entfernt werden.

Das erfindungsgemäße Abtastmikroskop ermöglicht es, hochaufgelöste Schnittbilder des Objektes aufzunehmen. Hierzu wird das Objekt schrittweise mit dem Lichtblatt abgetastet. Diese Abtastung erfolgt beispielsweise dadurch, dass das Objekt längs oder quer zur optischen Achse der Beleuchtungsoptik relativ zu dieser bewegt wird.

Erfindungsgemäß ist ein von der Beleuchtungsoptik räumlich getrenntes Beobachtungsobjektiv vorgesehen, dessen optische Achse im Wesentlichen senkrecht zu dem durch den bewegten Beleuchtungsfokus erzeugten Lichtblatt liegt und zugleich unter einem spitzen Winkel zur optischen Achse der Beleuchtungsoptik angeordnet ist. Unter einem spitzen Winkel ist dabei ein Winkel gemeint, der kleiner als der in herkömmlichen Anordnungen vorgesehene Winkel von 90 Grad ist. Dieser spitze Winkel gibt also den Winkel zwischen der Beleuchtungsachse, die durch die optische Achse der Beleuchtungsoptik festgelegt ist, und der Beobachtungsachse an, die durch die optische Achse des Beobachtungsobjektivs festgelegt ist. Der Wert dieses Winkels ist in Abhängigkeit der konkret vorliegenden Konfiguration, insbesondere in Abhängigkeit der Form des zu untersuchenden Objektes zu wählen. Vorzugsweise liegt der spitze Winkel in einem Winkelbereich von 20 bis 80 Grad, wobei innerhalb dieses Bereiches ein Wert von 50 Grad besonders bevorzugt ist.

Der erfindungsgemäß schräg gestellte, die Abtastbewegung ausführende Beleuchtungsfokus definiert eine schräg gestellte Objektebene, die durch das Beobachtungsobjektiv abgebildet wird. Dabei ist das Beobachtungsobjektiv so ausgerichtet, dass seine optische Achse senkrecht zu dieser Objektebene verläuft. Die Erfindung ermöglicht hierbei eine besonders einfache Orientierung der Objektebene, indem der Beleuchtungsstrahl entsprechend der gewünschten Orientierung beim Einfall in die Beleuchtungsoptik aus der Pupillenmitte versetzt wird. Je weiter der Beleuchtungsstrahl aus der Pupillenmitte versetzt ist, desto stärker wird der Beleuchtungsfokus und damit die durch den bewegten Beleuchtungsfokus definierte Objektebene relativ zur optischen Achse der Beleuchtungsoptik schräg gestellt.

Als Beleuchtungsoptik und Beobachtungsobjektiv werden vorzugsweise Objektivsysteme mit einem relativ großen freien Arbeitsabstand (z.B. größer als 1 mm) verwendet. Sowohl für die Beleuchtung als auch die Beobachtung kann ein Trockenobjektiv oder auch ein Immersionsobjektiv mit Wasser oder einer anderen Flüssigkeit als Immersionsmedium zum Einsatz kommen.

Die Abtastvorrichtung ändert die Einfallsrichtung des Beleuchtungslichtstrahls zur Erzeugung eines durch den bewegten Beleuchtungsfokus gebildeten, zur optischen Achse der Beleuchtungsoptik schräg gestellten Lichtblattes innerhalb einer Einfallsebene, die zur optischen Achse der Beleuchtungsoptik parallel versetzt ist. Das Beobachtungsobjektiv ist dabei mit seiner optischen Achse senkrecht zu dem erzeugten Lichtblatt angeordnet. Unter der Annahme, dass die Eintrittspupille der Beleuchtungsoptik kreisrund ausgeführt ist, bildet die vorstehend genannte Einfallsebene in der Draufsicht auf die Eintrittspupille eine Gerade, die den durch den Pupillenrand definierten Kreis nach Art einer Sekante in zwei voneinander verschiedenen Punkten schneidet, ohne den Mittelpunkt dieses Kreises zu kreuzen. In der vorstehend definierten Draufsicht führt dann der Beleuchtungslichtstrahl eine Kippbewegung längs dieser Sekante aus. Die Beleuchtungsoptik setzt diese Kippbewegung in eine entsprechende Bewegung des Beleuchtungsfokus längs einer Geraden um, die parallel zu der vorstehend genannten Sekante verläuft. Auf diese Weise kann in einfacher Weise das gewünschte Lichtblatt zur Beleuchtung des Zielbereichs erzeugt werden.

Die Abtastvorrichtung umfasst eine Steuereinheit sowie eine mit der Steuereinheit gekoppelte erste Stelleinheit zum Variieren der Schrägstellung des Lichtblattes und eine mit der Steuereinheit gekoppelte zweite Stelleinheit zum Bewegen des Beobachtungsobjektivs. Die Steuereinheit steuert dabei die beiden Stelleinheiten aufeinander abgestimmt so an, dass das Beobachtungsobjektiv mit seiner optischen Achse senkrecht auf dem durch die erste Stelleinheit verstellten Lichtblatt ausgerichtet bleibt. Diese Ausgestaltung ermöglicht eine variable Schrägstellung des Lichtblattes und damit der durch das Lichtblatt definierten Objektebene. Die Steuereinheit sorgt zudem über eine geeignete Ansteuerung der beiden Stelleinheiten dafür, dass das Beobachtungsobjektiv nachgeführt wird, um die senkrechte Ausrichtung des Beobachtungsobjektivs auf die Objektebene sicherzustellen.

In einer möglichen Ausgestaltung ist die Beleuchtungsoptik längs einer senkrecht zu ihrer optischen Achse liegenden Verstellrichtung beweglich geführt. Ferner umfasst die erste Stelleinheit in dieser Ausgestaltung einen Antrieb, der die Beleuchtungsoptik zum Variieren der Schrägstellung des Lichtblattes längs der Verstellrichtung bewegt. Indem die Beleuchtungsoptik senkrecht zu ihrer optischen Achse bewegt wird, kann der Teilbereich der Eintrittspupille, durch den der Beleuchtungslichtstrahl tritt, von der Pupillenmitte weg oder zu dieser hinbewegt werden, um die Schrägstellung des Beleuchtungsfokus zu verstärken bzw. zu verringern.

In einer alternativen Ausführungsform umfasst die erste Stelleinheit ein in dem Lichtweg des Beleuchtungslichtstrahls zwischen der Lichtquelle und der Beleuchtungsoptik angeordnetes, längs einer quer zur optischen Achse der Beleuchtungsoptik liegenden Verstellrichtung beweglich geführtes optisches Versatzelement, durch das die Einfallsebene des Beleuchtungslichtstrahls parallel zur optischen Achse der Beleuchtungsoptik versetzt ist, und einen Antrieb, der das Versatzelement zum Variieren der Schrägstellung des Lichtblattes längs der Verstellrichtung bewegt. Dabei kann das Versatzelement mittels des Antriebs geradling, z.B. senkrecht zur optischen Achse der Beleuchtungsoptik, aber auch längs einer gekrümmten Bahn bewegt, z. B. um eine Schwenkachse verschwenkt werden. Der Antrieb kann zudem so ausgebildet sein, dass das Versatzelement vollständig aus dem Lichtweg des Beleuchtungslichtstrahls entfernt werden kann. In diesem Fall kann das erfindungsgemäße Abtastmikroskop wie ein herkömmliches konfokales Abtastmikroskop genutzt werden, das eine punktweise Beleuchtung des Objektes vorsieht.

Das optische Versatzelement ist beispielsweise eine transparente, planparallele oder keilförmige Platte, die den gewünschten Versatz des Beleuchtungslichtstrahls aus der Mitte der Eintrittspupille der Beleuchtungsoptik bewirkt. In einer weiteren alternativen Ausführungsform umfasst die erste Stelleinheit eine im Bereich der Eintrittspupille der Beleuchtungsoptik angeordnete Blende, die eine den Beleuchtungslichtstrahl zum Teil durchlassende Blendenöffnung aufweist und längs einer senkrecht zur optischen Achse der Beleuchtungsoptik liegenden Verstellrichtung beweglich geführt ist, und einen Antrieb, der die Blende zum Variieren der Schrägstellung des Lichtblattes längs der Verstellrichtung bewegt. Die Größe der Blendenöffnung legt den wirksamen Strahldurchmesser des in die Beleuchtungsoptik einfallenden Beleuchtungslichtstrahls fest. Vorzugsweise ist die Größe der Blendenöffnung variabel, so dass durch Verstellen der Blendenöffnung die Abmessungen des Beleuchtungsfokus variiert werden können. Je kleiner die Blendenöffnung ist, desto stärker ist der Beleuchtungsfokus aufgeweitet.

Die erfindungsgemäße dezentrale Unterleuchtung der Eintrittspupille der Beleuchtungsoptik kann auch in anderer Weise als vorstehend beschrieben realisiert werden. So ist beispielsweise denkbar, den Beleuchtungslichtstrahl schon in seinem Lichtweg vor der Abtastvorrichtung parallel zur optischen Achse der Beleuchtungsoptik zu versetzen und seinen Strahldurchmesser entsprechend der gewünschten Unterleuchtung zu verringern. Der Parallelversatz des Beleuchtungslichtstrahls kann beispielsweise durch Einbringen von schräg gestellten Glasplatten erfolgen. Enthält die Abtastvorrichtung, wie das für herkömmliche konfokale Abtastmikroskope in der Regel der Fall ist, eine bewegliche Spiegelanordnung, so kann durch den vorstehend genannten Parallelversatz dafür gesorgt werden, dass der Beleuchtungslichtstrahl auf einen Reflexionspunkt der Spiegelanordnung fällt, der gegenüber einem Reflexionspunkt, auf den der Beleuchtungslichtstrahl in der herkömmlichen konfokalen Anwendung auf die Spiegelanordnung trifft, versetzt ist. Dieser schon in der Abtastvorrichtung realisierte Versatz bewirkt dann die gewünschte Dezentrierung des Beleuchtungslichtstrahls in der Eintrittspupille der Beleuchtungsoptik.

Vorzugsweise umfasst das erfindungsgemäße Abtastmikroskop einen Bildsensor, der mit dem Beobachtungsobjektiv eine Detektionseinheit bildet, die mittels der zweiten Stelleinheit bewegbar ist. In dieser Ausgestaltung wird also der Bildsensor gemeinsam mit dem Beobachtungsobjektiv nachgeführt, so dass sichergestellt ist, dass der Bildsensor und das Beobachtungsobjektiv stets aufeinander ausgerichtet bleiben.

In einer besonders bevorzugten Ausgestaltung ist der Beleuchtungslichtstrahl aus einem Anregungslichtstrahl und einem Abregungslichtstrahl zusammengesetzt, die vor Eintritt in die Abtastvorrichtung einander überlagert sind. Die Beleuchtungsoptik erzeugt aus dem Anregungslichtstrahl einen Anregungsfokus und aus dem Abregungslichtstrahl einen Abregungsfokus, die einander zu dem Beleuchtungsfokus überlagert sind. Auf dem Gebiet der Fluoreszenzmikroskopie kann ein solcher Abregungslichtstrahl beispielsweise nach dem sogenannten STED-Verfahren dazu genutzt werden, die räumliche Auflösung der lichtmikroskopischen Abbildung über die Beugungsgrenze hinaus zu steigern. Bei dem STED-Verfahren werden durch den Abregungslichtstrahl Fluoreszenzfarbstoffe, die zum Markieren einzelner Bereiche des Objektes eingesetzt werden, in an sich bekannter Weise gezielt abgeregt und damit gleichsam ausgeschaltet, um das Auflösungsvermögen zu steigern. In dem erfindungsgemäßen Abtastmikroskop kann durch Anwendung des STED-Verfahrens die Wirksamkeit des Beleuchtungsfokus dadurch, dass dem Anregungslichtstrahl der Abregungslichtstrahl überlagert wird, zur Auflösungssteigerung eingeengt und damit das resultierende Lichtblatt dünner geformt werden. Indem der Abregungslichtstrahl dem Anregungslichtstrahl schon vor Erreichen der Abtastvorrichtung überlagert wird, werden die beiden einander überlagerten Lichtstrahlen durch die Abtastvorrichtung gemeinsam in der Eintrittspupille der Beleuchtungsoptik verkippt.

Vorzugsweise hat der Abregungsfokus eine räumliche Lichtintensitätsverteilung, die in einer Ebene, in welcher der aus dem Anregungsfokus und dem Abregungsfokus zusammengesetzte Beleuchtungsfokus zur Erzeugung eines Lichtblattes bewegt wird, ein Minimum und beiderseits dieser Ebene jeweils ein Maximum aufweist. Während bei der herkömmlichen Anwendung des STED-Verfahrens der Abregungsfokus im Querschnitt eine Ringform aufweist, sieht die vorstehend genannte Ausführungsform einen Abregungsfokus vor, der im Querschnitt (oberhalb und unterhalb der Ebene, in der der Beleuchtungsfokus zur Erzeugung des Lichtblattes bewegt wird) zwei Intensitätsmaxima und zwischen diesen Maxima ein Minimum aufweist. Dabei ist dieses Intensitätsquerschnittsprofil vorzugsweise symmetrisch mit zwei gleichgroßen Maxima und einer dazwischen liegenden Nullstelle als Minimum ausgebildet.

Diese vorteilhafte Ausgestaltung macht sich den Umstand zunutze, dass eine STED-Abregung in der Ebene, in der der Beleuchtungsfokus zur Erzeugung des Lichtblattes bewegt wird, nicht erforderlich, ja sogar unerwünscht ist. So soll bei der erfindungsgemäßen Lösung ein möglichst großflächiges und zugleich möglichst dünnes Lichtblatt erzeugt werden, um räumlich hochaufgelöste optische Schnittbilder aufnehmen zu können. Dabei ist die Fläche des Lichtblattes durch die Länge des bewegten Beleuchtungsfokus definiert, während die Blattdicke durch die Ausdehnung des Beleuchtungsfokus quer zu der Ebene, in der der Beleuchtungsfokus bewegt wird, festgelegt ist. Der vorstehend beschriebene Abregungsfokus ist nun gerade so geformt, dass er die Anregungswirksamkeit des Anregungsfokus lediglich in Richtung der Fokusquerausdehnung, nicht jedoch in Richtung der Fokuslängsausdehnung herabsetzt.

Es ist denkbar, das erfindungsgemäße Abtastmikroskop mit einem Element auszustatten, das dazu dient, die Intensität des Beleuchtungslichtstrahls innerhalb einer Abtastperiode, während der der Beleuchtungsfokus über den Zielbereich bewegt wird, zu variieren. Diese Ausgestaltung nutzt den Umstand, dass das den Zielbereich beleuchtende Lichtblatt sequenziell durch den bewegten Beleuchtungsfokus aufgespannt wird. Dadurch ist es möglich, eine modulierte bzw. strukturierte Beleuchtung des Zielbereichs zu realisieren. Hierzu wird innerhalb der Abtastperiode, in der der Beleuchtungsfokus den Zielbereich abtastet, die Intensität des Beleuchtungslichtstrahls variiert. So kann die Intensität des Beleuchtungslichtstrahls zu jedem beliebigen Zeitpunkt innerhalb der Abtastperiode und damit an jeder beliebigen Stelle des Zielbereichs nach Wunsch eingestellt werden. Als Element, das die Intensität des Beleuchtungslichtstrahls innerhalb der Abtastperiode variiert, kann beispielsweise ein akusto-optisch abstimmbarer Filter (AOTF), ein akustooptischer Modulator (AOM) oder ein elektro-optischer Modulator (EOM) verwendet werden.

Nach einem weiteren Aspekt der Erfindung ist ein Verfahren zur lichtmikroskopischen Abbildung eines Objektes mit den Merkmalen des Anspruchs 11 vorgesehen.

Das erfindungsgemäße Verfahren kann vorteilhaft in der Lokalisationsmikroskopie eingesetzt werden. Über eine dosierte Beleuchtung wird sichergestellt, dass eine Einzelmolekül-Detektion möglich ist. Über eine Schwerpunktbestimmung der detektierten Photonen können dann die Orte der verwendeten Fluoreszenzfarbstoffe bestimmt werden.

Das erfindungsgemäße Verfahren kann besonders gewinnbringend zur Abbildung von sphärischen biologischen Objekten, z.B. einer Gewebekultur im Auge einer Maus oder einer Ratte, angewandt werden.

Die Erfindung wird im Folgenden anhand der Figuren näher erläutert. Darin zeigen:
Figur 1a eine schematische Darstellung, die die in der herkömmlichen konfokalen Abtastmikroskopie angewandte vollständige Ausleuchtung der Eintrittspupille einer Beleuchtungsoptik zur Erzeugung eines Beleuchtungsfokus veranschaulicht;
Figur 1b eine Draufsicht auf den in Figur 1a gezeigten Beleuchtungsfokus;
Figur 2a eine schematische Darstellung, die die in der herkömmlichen konfokalen Abtastmikroskopie angewandte Abtastung durch Verkippen eines in die Eintrittspupille der Beleuchtungsoptik eintretenden Beleuchtungslichtstrahls veranschaulicht;
Figur 2b eine Draufsicht auf den in Figur 2a gezeigten Beleuchtungsfokus;
Figur 3a eine schematische Darstellung, die die erfindungsgemäße Unterleuchtung der Eintrittspupille der Beleuchtungsoptik mit dem Beleuchtungslichtstrahl veranschaulicht;
Figur 3b eine Draufsicht auf den in Figur 3a gezeigten Beleuchtungsfokus;
Figur 4a eine schematische Darstellung, die die erfindungsgemäße Abtastung durch Verkippen des die Eintrittspupille der Beleuchtungsoptik unterleuchtenden Beleuchtungslichtstrahls veranschaulicht;
Figur 4b eine schematische Darstellung, die eine Bewegungssequenz des in Figur 4a gezeigten Beleuchtungsfokus veranschaulicht;
Figur 5 ein konfokales Abtastmikroskop als erstes Ausführungsbeispiel;
Figur 6 eine schematische Darstellung, die das Schrägstellen des Beleuchtungsfokus durch das in Figur 5 gezeigte Verschieben der Beleuchtungsoptik veranschaulicht;
Figur 7 eine schematische Darstellung, die die Ausrichtung des Beobachtungsobjektivs auf den schräg gestellten Beleuchtungsfokus veranschaulicht;
Figur 8 ein konfokales Abtastmikroskop als zweites Ausführungsbeispiel;
Figur 9 ein konfokales Abtastmikroskop als drittes Ausführungsbeispiel;
Figur 10 ein konfokales Abtastmikroskop als viertes Ausführungsbeispiel;
Figur 11 eine schematische Darstellung, die das Verschieben einer in dem Abtastmikroskop nach Figur 10 vorgesehenen Blendenplatte zum Schrägstellen des Beleuchtungsfokus veranschaulicht;
Figur 12 ein nach dem STED-Verfahren arbeitendes konfokales Abtastmikroskop als fünftes Ausführungsbeispiel;
Figur 13a eine schematische Darstellung, die die Überlagerung eines Anregungsfokus mit einem Abregungsfokus veranschaulicht; und
Figur 13b eine Draufsicht auf den Anregungsfokus und den Abregungsfokus, die in Figur 13a gezeigt sind.

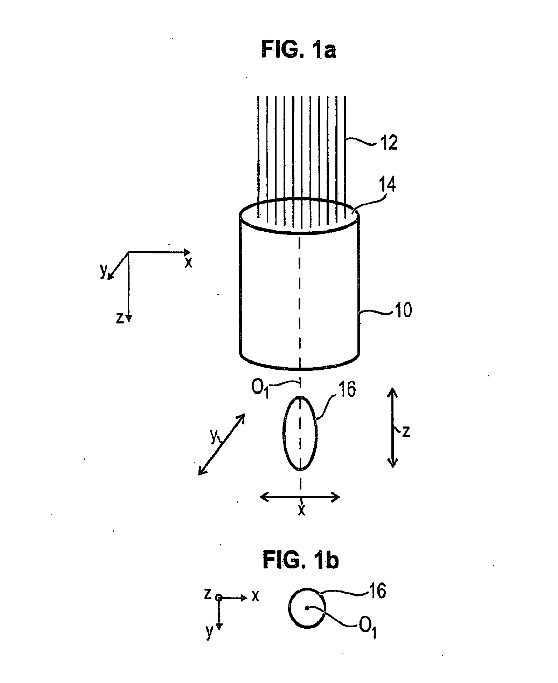

Unter Bezugnahme auf die Figuren 1 bis 4 wird im Folgenden zunächst das erfindungsgemäße Prinzip der dezentralen Pupillenunterleuchtung veranschaulicht. Insbesondere wird erläutert, wie eine Beleuchtungsoptik 10 aus einem Beleuchtungslichtstrahl 12, der auf eine Eintrittspupille 14 der Beleuchtungsoptik 10 fällt, in erfindungsgemäßer Weise einen Beleuchtungsfokus 16 erzeugt. Dabei ist darauf hinzuweisen, dass die vorstehend genannten Figuren rein schematische Darstellungen sind, die lediglich dazu dienen sollen, das Verständnis der Erfindung zu erleichtern.

In Figur 1a ist zunächst der für eine herkömmliche konfokale, punktweise Abtastung typische Fall veranschaulicht, bei dem das durch den Beleuchtungslichtstrahl 12 gebildete Strahlenbündel die volle Apertur der Beleuchtungsoptik 10 nutzt, d.h. die gesamte Fläche der Eintrittspupille 14 der Beleuchtungsoptik 10 durchsetzt. In Figur 1a ist die optische Achse der Beleuchtungsoptik 10 mit O₁ bezeichnet. Der Beleuchtungslichtstrahl 12 ist in dem in Figur 1a gezeigten Fall parallel zur optischen Achse O₁ der Beleuchtungsoptik 10 ausgerichtet. Die Beleuchtungsoptik 10 erzeugt so eine fokussierte Lichtverteilung in Form des Beleuchtungsfokus 16, dessen Ausdehnung längs der optischen Achse O₁ größer als quer zur optischen Achse O₁ ist.

In den nachstehenden Erläuterungen wird jeweils auf ein Koordinatensystem Bezug genommen, dessen x-Achse in der Zeichenebene horizontal und dessen z-Achse in der Zeichenebene vertikal ausgerichtet ist, während die y-Achse aus der Zeichenebene herausweist. Bei dieser Festlegung ist die Eintrittspupille 14 parallel zur x-y-Ebene angeordnet, während die optische Achse O₁ parallel zur z-Achse verläuft.

Figur 1b zeigt den Beleuchtungsfokus 16 in einer Draufsicht in Blickrichtung der optischen Achse O₁. In dieser konventionellen Anordnung ist der Beleuchtungsfokus 16 in der Draufsicht kreisförmig.

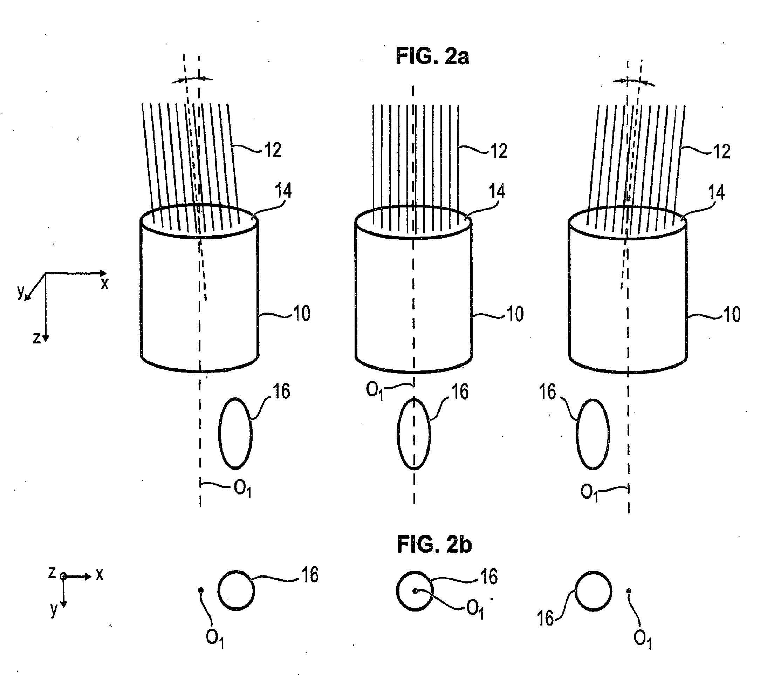

Figur 2a zeigt nun, wie sich die Lage des Beleuchtungsfokus 16 ändert, wenn der Beleuchtungslichtstrahl 12 in der Eintrittspupille 14 der Beleuchtungsoptik 10 verkippt wird. Dabei wird für den in Figur 2a gezeigten Fall angenommen, dass der Hauptstrahl des durch den Beleuchtungslichtstrahl 12 gebildeten Strahlenbündels in einer Einfallsebene verkippt wird, die parallel zur x-z-Ebene liegt. Ferner soll der Beleuchtungslichtstrahl 12 immer noch die gesamte Fläche der Eintrittspupille 14 durchsetzen, d.h. die Eintrittspupille 14 vollständig ausleuchten.

Der Beleuchtungslichtstrahl 12 wird in der Einfallsebene so verkippt, dass er seine Einfallsrichtung relativ zur optischen Achse O₁ ändert. Diese Änderung der Einfallsrichtung wird durch die Beleuchtungsoptik 10 in eine Verschiebung des Beleuchtungsfokus 16 quer zur optischen Achse O₁ umgesetzt. In dem in Figur 2a gezeigten Fall findet diese Bewegung längs der x-Achse statt. Da der Beleuchtungslichtstrahl 12 immer noch die gesamte Fläche der Eintrittspupille 14 durchsetzt, bleibt der Beleuchtungsfokus 16 mit seiner Längserstreckung parallel zur optischen Achse O₁ ausgerichtet. Dies zeigt sich auch in den in Figur 2b dargestellten Draufsichten, in denen der Beleuchtungsfokus 16 jeweils immer noch kreisrund ist.

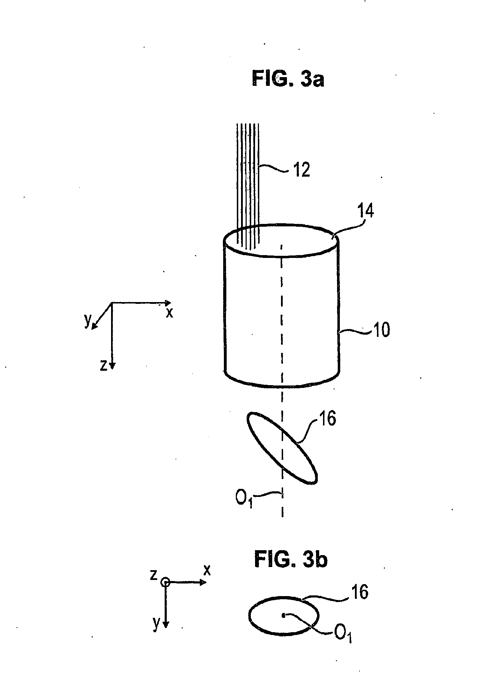

In Figur 3a ist die erfindungsgemäße Unterleuchtung der Eintrittspupille 14 der Beleuchtungsoptik 10 dargestellt. Wie in Figur 3a zu erkennen ist, durchsetzt der Beleuchtungslichtstrahl 12 lediglich einen Teilbereich der Eintrittspupille 14, wobei dieser Teilbereich dezentral angeordnet, d.h. quer zur optischen Achse O₁ aus der Pupillenmitte versetzt ist. Diese Dezentrierung des Beleuchtungslichtstrahls 12 in der Eintrittspupille 14 führt dazu, dass der Beleuchtungsfokus 16 relativ zur optischen Achse O₁ schräg gestellt wird. Dies ist auch in der Draufsicht nach Figur 3b zu erkennen, in der der Beleuchtungsfokus 16 nicht mehr kreisrund, sondern in Richtung der x-Achse länger als in Richtung der y-Achse ist. Durch die Unterleuchtung der Eintrittspupille 14 wird zudem eine Aufweitung des Beleuchtungsfokus 16 bewirkt, d.h. der Beleuchtungsfokus 16 ist insgesamt größer als bei vollständiger Ausleuchtung der Eintrittspupille 14.

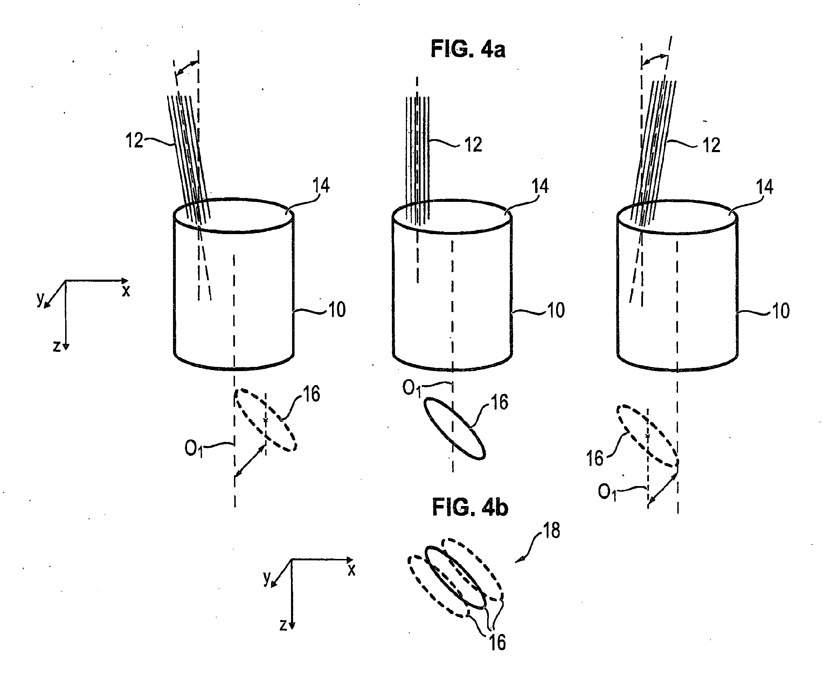

In Figur 4a ist nun der Fall gezeigt, in dem der die Eintrittspupille 14 dezentral unterleuchtende Beleuchtungslichtstrahl 12 in der Eintrittspupille 14 verkippt wird. Dabei soll für den in Figur 4a gezeigten Fall angenommen werden, dass der Hauptstrahl des den Beleuchtungslichtstrahl 12 bildenden Strahlenbündels in einer zur optischen Achse O₁ parallelen Einfallsebene verkippt wird, die parallel zur y-z-Ebene liegt. Dies bedeutet, dass der Beleuchtungslichtstrahl 12 in Figur 4a aus der Zeichenebene heraus und in diese hinein verkippt wird. Diese Verkippung des Beleuchtungslichtstrahls 12 wird durch die Beleuchtungsoptik 10 in eine entsprechende Verschiebung des schräg gestellten Beleuchtungsfokus 16 längs der y-Achse umgesetzt. Demnach wird der Beleuchtungsfokus 16 in Figur 4a aus der Zeichenebene heraus und in diese hinein verschoben. Dies ist in der Darstellung nach Figur 4b nochmals veranschaulicht.

Die in Figur 4b gezeigte Bewegungssequenz des Beleuchtungsfokus 16 macht deutlich, wie durch Bewegen des Beleuchtungsfokus 16 innerhalb einer Abtastperiode ein Lichtblatt 18 aufgebaut wird. Dabei ist die vorstehend genannte Abtastperiode die Zeit innerhalb der der Beleuchtungslichtstrahl 12 eine vollständige Kippbewegung ausführt. Diese Abtastperiode ist kürzer als eine Detektionszeit, mit der ein in den Figuren 4a und 4b nicht gezeigter Lichtdetektor zur Bilderzeugung arbeitet, d.h. den bewegten Beleuchtungsfokus 16 erfasst. Dies bedeutet, dass der Lichtdetektor den bewegten Beleuchtungsfokus 16 zeitlich und damit räumlich nicht aufgelöst erfasst. Vielmehr erfasst er eine zusammenhängende oder kontinuierliche Lichtverteilung in Form des Lichtblattes 18.

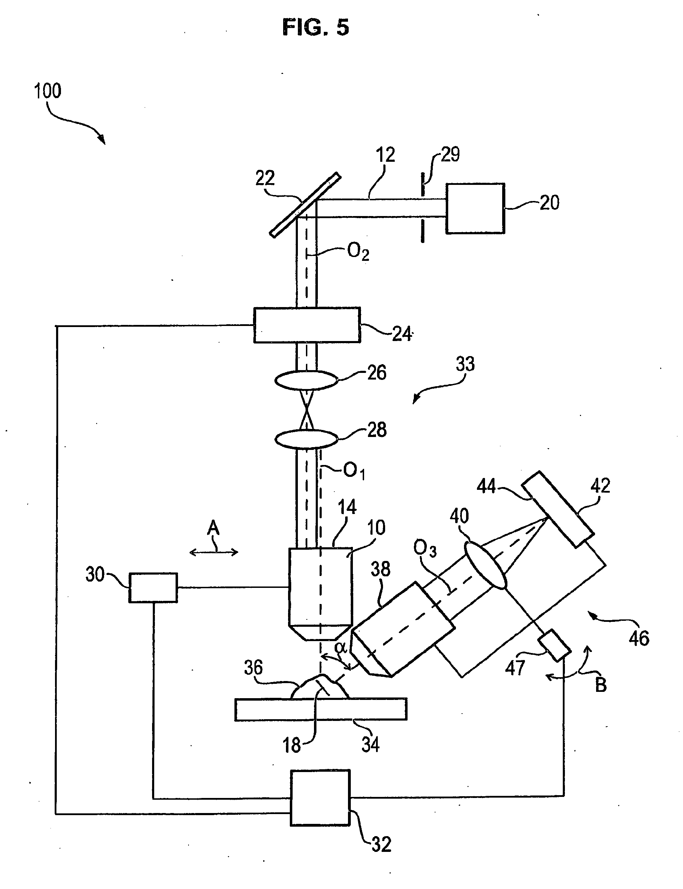

Figur 5 zeigt ein konfokales Abtastmikroskop 100 als erstes Ausführungsbeispiel in einer schematischen Darstellung. Das Abtastmikroskop 100 ist ausgebildet, nach dem in den Figuren 3 und 4 skizzierten Beleuchtungsprinzip zu arbeiten. Dabei ist darauf hinzuweisen, dass in der Darstellung nach Figur 5 Komponenten des Abtastmikroskops 100 weggelassen sind, die zum Verständnis des Erfindungsgegenstandes nicht wesentlich sind.

Das Abtastmikroskop 100 bildet ein konfokales Fluoreszenzmikroskop, das eine Laserlichtquelle 20 aufweist, die den Beleuchtungslichtstrahl 12 aussendet. Die Wellenlänge des Beleuchtungslichtstrahls 12 ist so gewählt, dass die in dem angewandten Mikroskopierverfahren verwendeten Fluoreszenzfarbstoffe durch den Beleuchtungslichtstrahl 12 zur Abgabe von Fluoreszenzstrahlung angeregt werden.

Der Beleuchtungslichtstrahl 12 fällt auf einen Spiegel 22, der den Beleuchtungslichtstrahl 12 auf eine in Figur 5 rein schematisch dargestellte Galvanospiegelanordnung 24 richtet. Die Galvanospiegelanordnung 24 dient dazu, den Beleuchtungslichtstrahl 12 so umzulenken, dass dieser die in Figur 4a veranschaulichte Abtastbewegung ausführt. Hierzu wird die Galvanospiegelanordnung 24 mittels eines in Figur 5 nicht explizit dargestellten Spiegelantriebs entsprechend bewegt. Anschließend tritt der Beleuchtungslichtstrahl 12 durch eine Abtastlinse 26 und eine Tubuslinse 28 und trifft schließlich auf die Beleuchtungsoptik 10.

Die optische Achse, entlang der der Beleuchtungslichtstrahl 12 auf die Beleuchtungsoptik 10 trifft, ist in Figur 5 mit O₂ bezeichnet. Diese optische Achse O₂ ist gegenüber der optischen Achse O₁ der Beleuchtungsoptik 10, welche die Eintrittspupille 14 zentral durchsetzt, parallel versetzt. Zudem leuchtet der in die Beleuchtungsoptik 10 eintretende Beleuchtungslichtstrahl 12 die Eintrittspupille 14 nicht vollständig aus. Dies bedeutet, dass der Beleuchtungslichtstrahl 12 nur einen Teilbereich der Eintrittspupille 14 durchsetzt und somit nicht die volle Apertur der Beleuchtungsoptik 10 nutzt. Diese Unterleuchtung der Eintrittspupille 14 wird durch eine Blende 29 bewirkt, die den von der Laserlichtquelle 20 ausgesendeten Beleuchtungslichtstrahl 12 in seinem Querschnitt entsprechend beschneidet. Die Blende 29 ist in dem in Figur 5 gezeigten Ausführungsbeispiel dem Spiegel 22 vorgeordnet. Sie kann jedoch auch an der anderen Stelle in dem Lichtweg des Beleuchtungslichtstrahls 12 angeordnet sein. Die Blendenöffnung der Blende 29 ist variabel einstellbar, wodurch sich der Querschnitt des auf die Eintrittspupille 14 der Beleuchtungsoptik 10 fallenden Beleuchtungslichtstrahls 12 und damit die Unterleuchtung der Eintrittspupille 14 nach Belieben verändern lassen.

Um den dezentralen Teilbereich der Eintrittspupille 14, den der Beleuchtungslichtstrahl 12 durchsetzt, variabel einstellen zu können, ist die Beleuchtungsoptik 10 in einer in Figur 5 mit dem Doppelpfeil A angedeuteten Verstellrichtung beweglich geführt. Die Verstellrichtung A liegt senkrecht zur optischen Achse O₁ der Beleuchtungsoptik 10.

Ein mit der Beleuchtungsoptik 10 gekoppelter erster Antrieb 30 dient dazu, die Beleuchtungsoptik 10 längs der Verstellrichtung A zu bewegen. Der Antrieb 30 wird über eine Steuereinheit 32 angesteuert.

Die in Figur 5 gezeigten Komponenten 24, 26, 28, 30 und 32 sind Teil einer allgemein mit 33 bezeichneten Abtastvorrichtung, die dazu dient, den Beleuchtungslichtstrahl 12 in der Eintrittspupille 14 der Beleuchtungsoptik 10 so zu verkippen, wie dies in den Figuren 4a und 4b veranschaulicht ist. Die Abtastvorrichtung 33 erzeugt so im Zusammenwirken mit der Beleuchtungsoptik 10 das Lichtblatt 18, das einen abzubildenden Zielbereich eines auf einem Objektträger 34 angeordneten Objektes 36 beleuchtet.

Das Abtastmikroskop 100 weist ferner ein Beobachtungsobjektiv 38 auf, das so auf die Probe 36 ausgerichtet ist, dass seine in Figur 5 mit O₃ bezeichnete optische Achse senkrecht auf dem Lichtblatt 18 steht. Da das Lichtblatt 18 schräg zur optischen Achse O₁ der Beleuchtungsoptik 10 liegt, schließen die optische Achse O₃ des Beobachtungsobjektivs 38 und die optische Achse O₁ der Beleuchtungsoptik 10 einen spitzen Winkel α ein, der kleiner als 90 Grad ist. In dem in Figur 5 gezeigten Ausführungsbeispiel beträgt der Winkel α etwa 60 Grad.

Das Beobachtungsobjektiv 38 bildet den mit dem Lichtblatt 18 beleuchteten Zielbereich des Objektes 36 über eine Tubuslinse 40 auf einen Lichtsensor 42 ab. Dabei steht die optische Achse O₃ des Beobachtungsobjektivs 38 senkrecht auf einer Lichtempfangsfläche 44 des Lichtdetektors 42. Das Beobachtungsobjektiv 38, die Tubuslinse 40 und der Lichtdetektor 42 bilden eine Detektionseinheit 46, die mittels eines zweiten Antriebs 47 zur senkrechten Ausrichtung der optischen Achse O₃ auf das Lichtblatt 16 verschwenkbar ist, wie in Figur 5 durch den Doppelpfeil B angedeutet ist. Der zweite Antrieb 47 wird ebenfalls über die Steuereinheit 32 angesteuert.

Die Steuereinheit 32 steuert die beiden Antriebe 30 und 47 so an, dass die das Beobachtungsobjektiv 38 enthaltende Detektionseinheit 46 bei einer Verschiebung der Beleuchtungsoptik 10 längs der Verstellrichtung A durch Verschwenken in der Schwenkrichtung B so nachgeführt wird, dass das Aufnahmeobjektiv 38 mit seiner optischen Achse O₃ senkrecht auf das lageveränderliche Lichtblatt 18 ausgerichtet bleibt. Das Verschieben der Beleuchtungsoptik 10 längs der Verstellrichtung A und das Verschwenken der Detektionseinheit 46 in der Schwenkrichtung B sind also über die Steuereinheit 32 so aufeinander abgestimmt, dass die rechtwinklige Ausrichtung des Beobachtungsobjektivs 38 auf das Lichtblatt 18 stets erhalten bleibt.

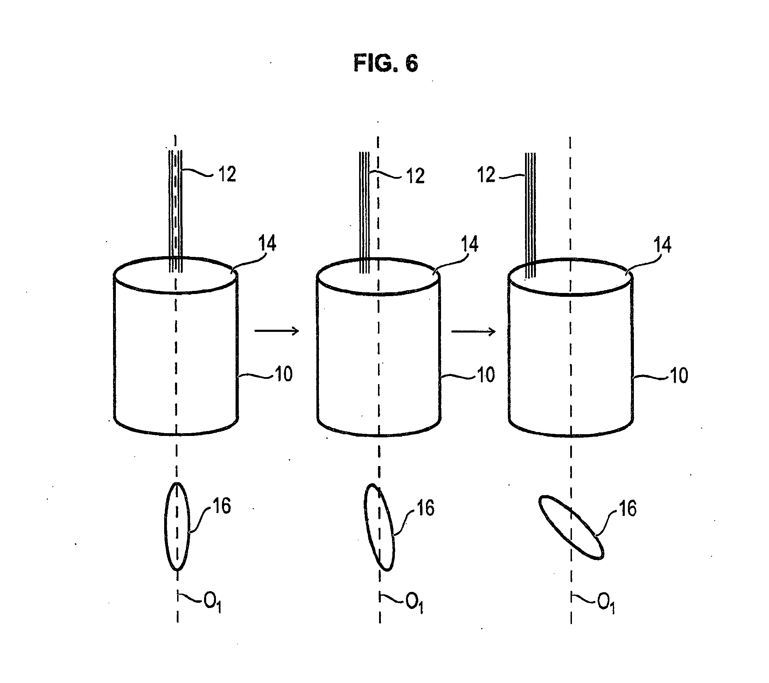

In der schematischen Darstellung nach Figur 6 ist veranschaulicht, wie bei dem in Figur 5 dargestellten Ausführungsbeispiel ein Verschieben der Beleuchtungsoptik 10 senkrecht zur optischen Achse O₁ zu einer variierenden Schrägstellung des Beleuchtungsfokus 16 führt. Wie in dem linken Teilbild der Figur 6 gezeigt, ist der längliche Beleuchtungsfokus 16 längs der optischen Achse O₁ ausgerichtet, wenn der Beleuchtungsstrahl 12 mittig auf die Eintrittspupille 14 der Beleuchtungsoptik 10 fällt. Wird nun die Beleuchtungsoptik 10 senkrecht zu ihrer optischen Achse O₁ so verschoben, dass der Beleuchtungslichtstrahl 12 aus der Pupillenmitte zum Pupillenrand hin auswandert, so wird der Beleuchtungsfokus 16 gegenüber der optischen Achse O₁ zunehmend schräg gestellt. Dies verdeutlicht, wie durch Verschieben der Beleuchtungsoptik 10 die Orientierung des durch den Beleuchtungsfokus 16 erzeugten Lichtblattes 18 variiert werden kann.

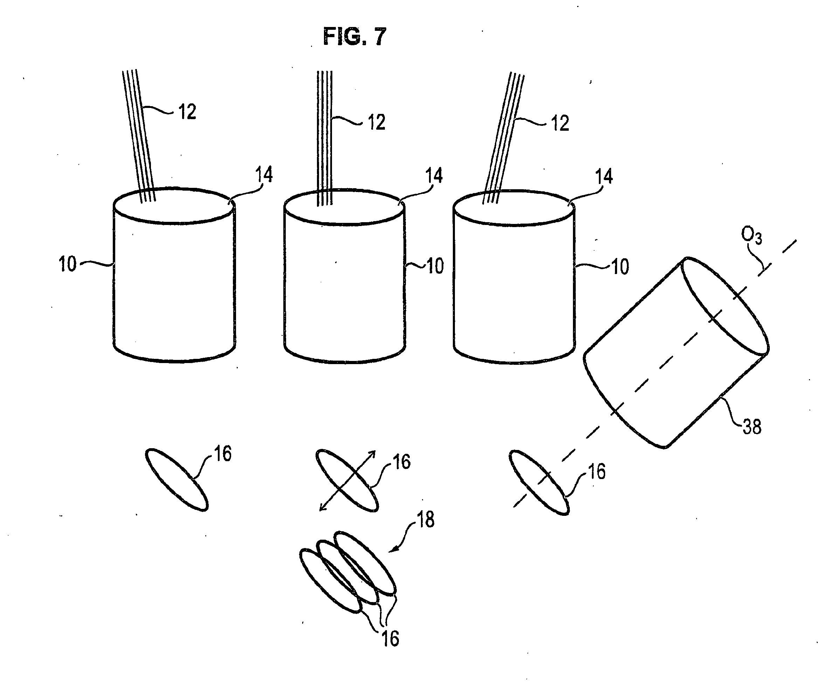

In Figur 7 ist nochmals veranschaulicht, wie das Beobachtungsobjektiv 38 auf den durch die Beleuchtungsoptik 10 erzeugten Beleuchtungsfokus 16 ausgerichtet ist. So verläuft die optische Achse O₃ des Beobachtungsobjektivs 38 senkrecht zur Längserstreckung des Beleuchtungsfokus 16. In Figur 7 ist ferner nochmals angedeutet, wie durch Verkippen des Beleuchtungslichtstrahls 12 in der Eintrittspupille 14 der Beleuchtungsoptik 10 aus dem bewegten Beleuchtungsfokus 16 das Lichtblatt 18 erzeugt wird.

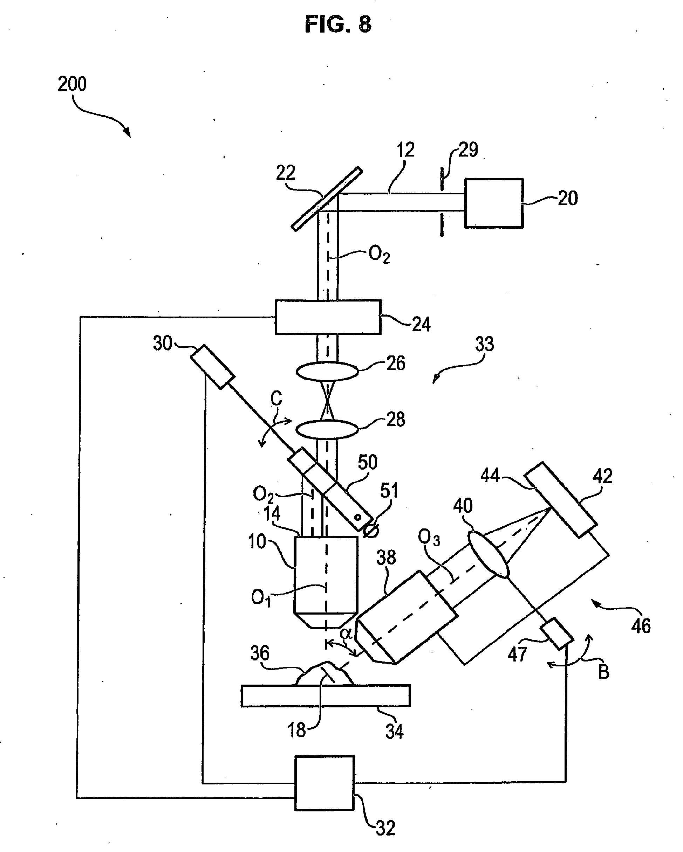

Figur 8 zeigt ein Abtastmikroskop 200 als zweites Ausführungsbeispiel. Diejenigen Komponenten des Abtastmikroskops 200, die mit denen des in Figur 5 gezeigten Abtastmikroskops 100 übereinstimmen, sind mit den in Figur 5 verwendeten Bezugszeichen versehen und werden im Folgenden nicht nochmals beschrieben.

Das Ausführungsbeispiel nach Figur 8 unterscheidet sich von dem in Figur 5 gezeigten Ausführungsbeispiel dadurch, dass an Stelle der Beobachtungsoptik 10 eine transparente planparallele Platte 50, z.B. eine Glasplatte, in einer Schwenkrichtung C verschwenkbar geführt ist, um den dezentrierten Einfall des Beleuchtungslichtstrahls 12 in die Eintrittspupille 14 der Beleuchtungsoptik 10 einzustellen. Die planparallele Platte 50 ist in dem Lichtweg des Beleuchtungslichtstrahls 12 zwischen der Tubuslinse 28 und der Eintrittspupille 14 angeordnet. Sie ist schräg zur optischen Achse O₁ der Beleuchtungsoptik 10 ausgerichtet. Dadurch erfährt der Beleuchtungslichtstrahl 12 beim Durchtritt durch die planparallele Platte 50 einen Parallelversatz, der ihn dezentral in die Eintrittspupille 14 der Beleuchtungsoptik 10 einfallen lässt.

Der Parallelversatz des Beleuchtungslichtstrahls 12 lässt sich variieren, indem der Antrieb 30 die planparallele Platte 50, die um eine senkrecht zur Zeichenebene der Figur 8 verlaufende Schwenkachse 51 schwenkbar gelagert ist, in der Schwenkrichtung C verkippt.

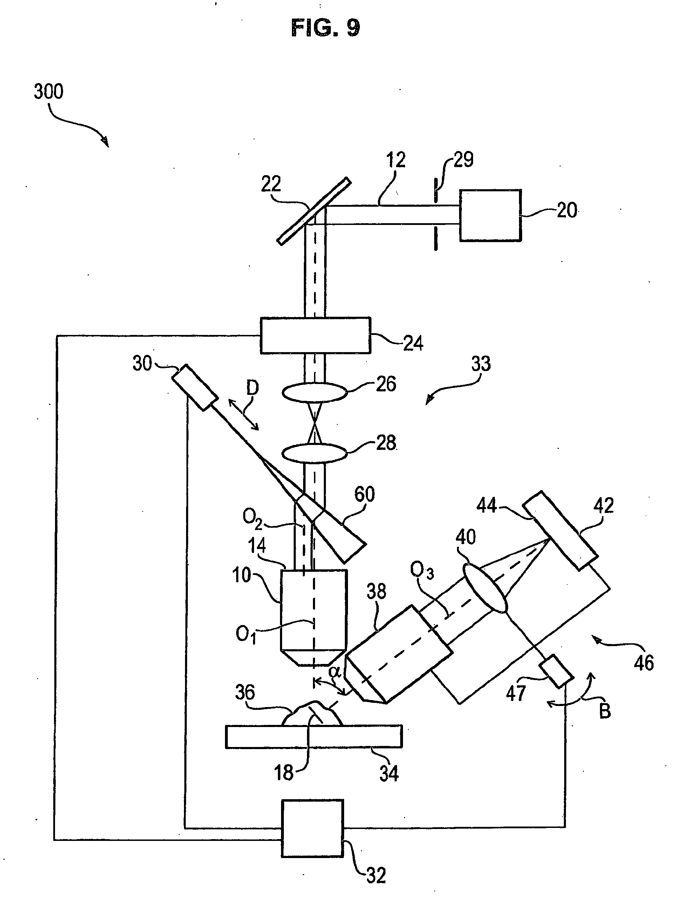

Figur 9 zeigt ein Abtastmikroskop 300 als drittes Ausführungsbeispiel. Das Abtastmikroskop 300 ist gegenüber dem in Figur 8 gezeigten Mikroskop 200 dahingehend abgewandelt, dass die planparallele Platte 50 durch eine transparente, keilförmige Platte 60, z.B. einen Glaskeil, ersetzt ist. Auch die keilförmige Platte 60 bewirkt einen Versatz des Beleuchtungslichtstrahls 12, wenn dieser durch die keilförmige Platte 60 tritt. Der Antrieb 30 bewegt in diesem Ausführungsbeispiel die keilförmige Platte 60 nicht senkrecht zur optischen Achse O₁ der Beleuchtungsoptik 10, sondern längs einer Verstellrichtung D, die schräg zur optischen Achse O₁ liegt.

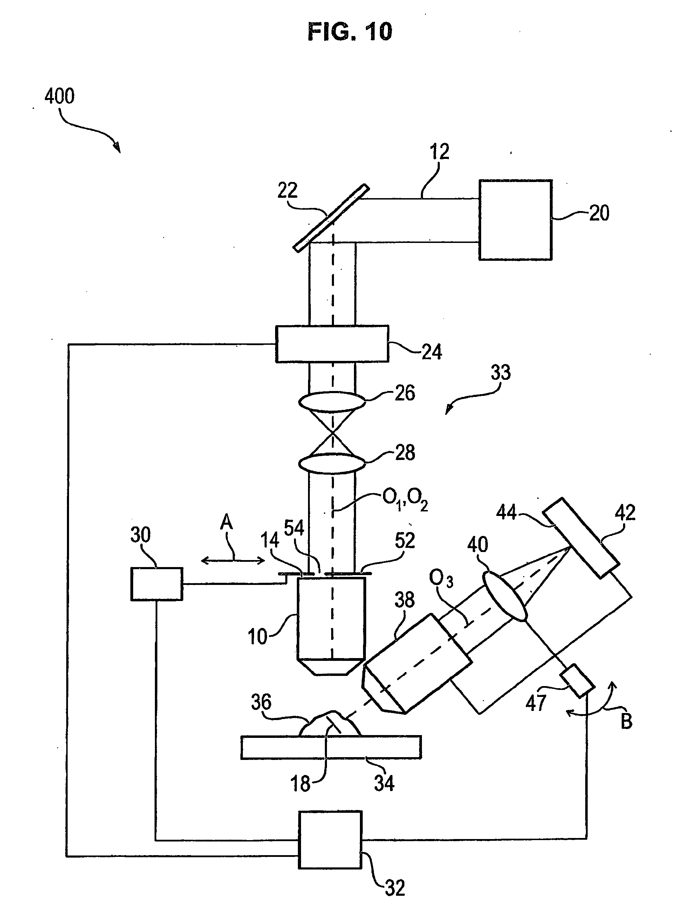

Figur 10 zeigt ein Abtastmikroskop 400 als viertes Ausführungsbeispiel. Dieses Ausführungsbeispiel unterscheidet sich von dem in Figur 8 gezeigten Ausführungsbeispiel dadurch, dass das zur Realisierung des dezentralen Einfalls des Beleuchtungsstrahls 12 in die Eintrittspupille 14 anstelle der planparallelen Platte 50 eine längs der Verstellrichtung A beweglich geführte Blendenplatte 52 vorgesehen ist. Die Blendenplatte 52 weist eine variable Blendenöffnung 54 auf, die den Beleuchtungslichtstrahl 12 beim Durchtritt durch die Blendenöffnung 54 in seinem Querschnitt so beschneidet, dass die gewünschte Unterleuchtung der Eintrittspupille 14 erzielt wird. Da die Blendenöffnung 54 beliebig einstellbar ist, kann bei dem in Figur 10 gezeigten Ausführungsbeispiel auch auf das in den vorherigen Ausführungsbeispielen vorgesehene Blendenelement 29 verzichtet werden.

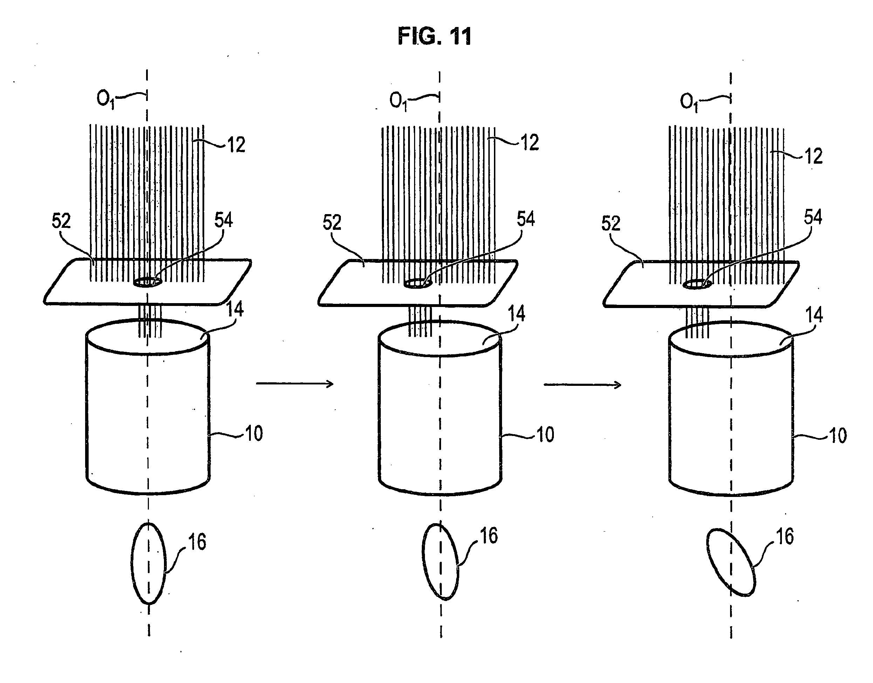

In Figur 11 ist die Wirkungsweise der Blendenplatte 52 nochmals veranschaulicht. Indem der Antrieb 30 die Blendenplatte 52 senkrecht zur optischen Achse O₁ der Beleuchtungsoptik 10 verschiebt, wird der Teil des Beleuchtungslichtstrahls 12, der durch die Blendenöffnung 54 tritt, aus der Pupillenmitte versetzt. Wandert der durchgelassene Teil des Beleuchtungslichtstrahls 12 aus der Pupillenmitte zum Pupillenrand, so wird der Beleuchtungsfokus 16 gegenüber der optischen Achse O₁ zunehmend schräg gestellt.

In Figur 11 ist die Blendenplatte 54 der einfacheren Darstellung wegen in einem gewissen Abstand von der Eintrittspupille 14 gezeigt. Es ist jedoch darauf hinzuweisen, dass die Blendenplatte 54 vorzugsweise so nah wie möglich an der Eintrittspupille 14 angeordnet ist, um die zum Bewegen des Beleuchtungsfokus 16 vorgesehene Kippbewegung des Beleuchtungslichtstrahls 12 in der Eintrittspupille 14 nicht nachteilig zu beeinflussen.

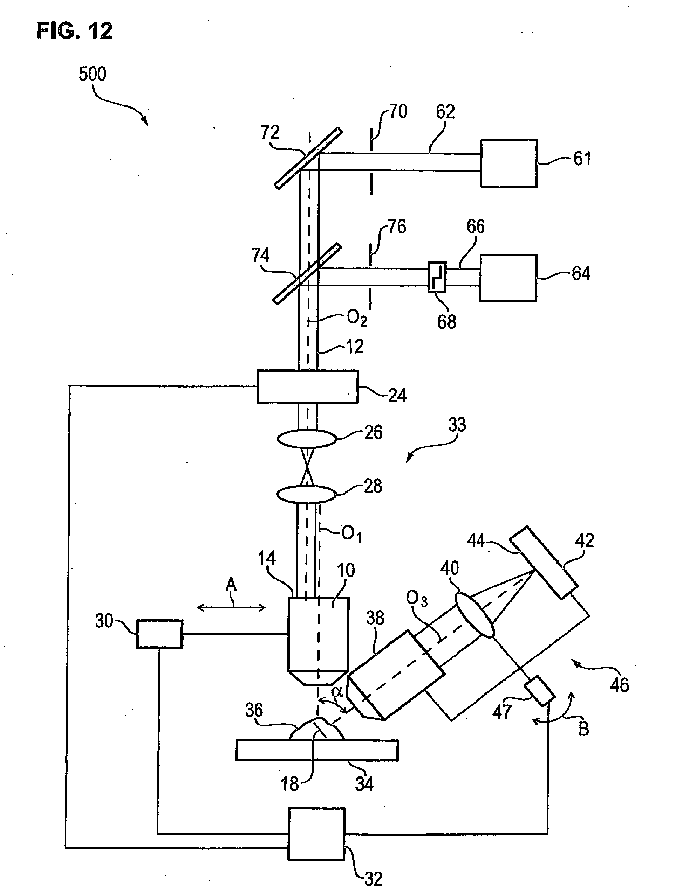

Figur 12 zeigt ein Abtastmikroskop 500 als fünftes Ausführungsbeispiel. Das Abtastmikroskop 500 ist gegenüber dem in Figur 5 dargestellten Ausführungsbeispiel dahingehend abgewandelt, dass es darauf ausgelegt ist, unter Anwendung des an sich bekannten STED-Verfahrens eine über die Beugungsgrenze hinausgehende räumliche Auflösung zu erzielen. Dabei ist darauf hinzuweisen, dass diese Abwandlung nicht nur für das in Figur 5 gezeigte Ausführungsbeispiel, sondern auch für alle anderen Ausführungsbeispiele möglich ist.

Das Abtastmikroskop 500 umfasst eine Anregungslichtquelle 61, die einen Anregungslichtstrahl 62 aussendet, dessen Wellenlänge so gewählt ist, dass die verwendeten Fluoreszenzfarbstoffe zur Abgabe von Fluoreszenzstrahlung angeregt werden. Ferner umfasst das Abtastmikroskop 500 eine Abregungslichtquelle 64, die einen Abregungslichtstrahl 66 aussendet, der dem Anregungsstrahl 62 in weiter unten beschriebener Weise überlagert wird und dessen Wellenlänge so gewählt ist, dass die durch den Anregungslichtstrahl 62 beleuchteten Fluoreszenzfarbstoffe durch stimulierte Emission abgeregt und damit gleichsam ausgeschaltet werden. Der von der Abregungslichtquelle 64 ausgesendete Abregungslichtstrahl 66 tritt durch eine Phasenplatte 68, die dazu dient, ein gewünschtes Intensitätsprofil des Abregungsstrahls 66 einzustellen.

Der Anregungslichtstrahl 62 tritt durch eine Blende 70 und fällt auf einen Spiegel 72, der den Anregungslichtstrahl 62 in Richtung eines Strahlteilers 74 reflektiert. Der Strahlteiler 74 ist so ausgebildet, dass er den Anregungslichtstrahl 62 durchlässt, während er den durch die Phasenplatte 68 und eine weitere Blende 76 tretenden Abregungslichtstrahl 66 reflektiert. Auf diese Weise werden der Anregungslichtstrahl 62 und der in seinem Intensitätsprofil durch die Phasenplatte 68 beeinflusste Abregungsstrahl 66 einander überlagert. Die beiden einander überlagerten Lichtstrahlen 62 und 66 bilden dann den Beleuchtungslichtstrahl 12.

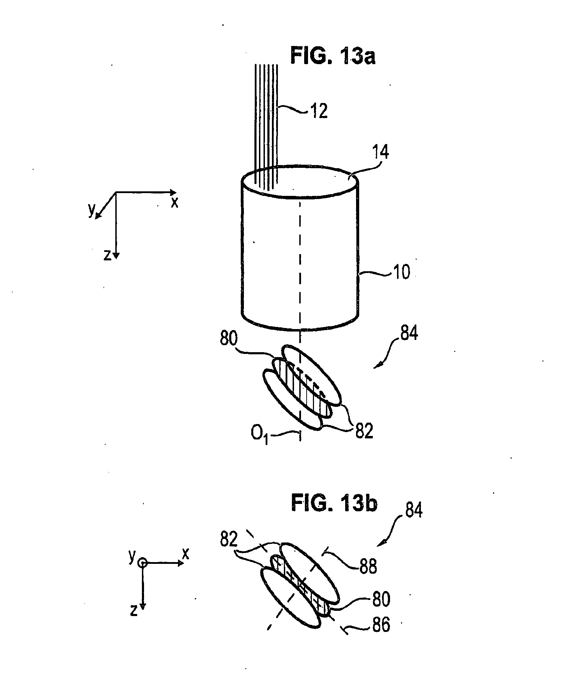

In den Figuren 13a und 13b ist veranschaulicht, wie die Überlagerung des Anregungslichtstrahls 62 und des Abregungslichtstrahls 66 zu dem Beleuchtungslichtstrahl 12 zu einer Steigerung des Auflösungsvermögens des angewandten Mikroskopierverfahrens führt.

Nachdem der Beleuchtungsstrahl 12 in diesem Fall aus einer Überlagerung des Anregungslichtstrahls 62 und des Abregungslichtstrahls 66 gebildet ist, erzeugt die Beleuchtungsoptik 10 einen Anregungsfokus 80 sowie einen Abregungsfokus 82, die in ihrer Überlagerung einen in den Figuren 13a und 13b mit 84 bezeichneten Beleuchtungsfokus ergeben. Dabei entspricht der in den Figuren 13a und 13b gezeigte Anregungsfokus 80 in seiner Form dem in den Figuren 3 und 4 gezeigten Beleuchtungsfokus 16.

In Figur 13b sind der Anregungsfokus 80, der Abregungsfokus 82 und der resultierende Beleuchtungsfokus 84 in einem Schnitt parallel zur x-z-Ebene dargestellt. Wie aus dieser Darstellung deutlich wird, hat der Abregungsfokus 82 eine räumliche Lichtintensitätsverteilung, bei der die Lichtintensität in der Ebene, in welcher der aus dem Anregungsfokus 80 und dem Abregungsfokus 82 zusammengesetzte Beleuchtungsfokus 84 bewegt wird, gleich Null ist, während sie beiderseits dieser Ebene jeweils ein Maximum aufweist. Die vorstehend genannte Ebene ist in Figur 13b mit 86 bezeichnet. Sie liegt parallel zu einer Ebene, welche die y-Achse enthält und deren Schnittgerade mit der x-z-Ebene mit der x-Achse einen Winkel bildet. Dieser Winkel ist abhängig von dem maximalen Öffnungswinkel der verwendeten Beleuchtungsoptik 10 und der Aufweitung sowie der Dezentrierung des Beleuchtungslichtstrahls 12.

Indem der Anregungsfokus 80 oberhalb und unterhalb dieser Bewegungsebene 86 von dem Abregungsfokus 82 überlagert ist, wird die Anregungswirksamkeit des Anregungsfokus 80 von oberhalb und unterhalb der Bewegungsebene 86 her herabgesetzt. Der anregungswirksame Teil des Anregungsfokus 80 ist in Figur 13b schraffiert angedeutet.

In Figur 13b ist die Richtung, in der der Anregungsfokus 62 gleichsam eingeengt wird, durch eine Linie 88 angedeutet. Diese Einengungsrichtung 88 steht senkrecht auf der Bewegungsebene 86. Die Überlagerung des Anregungsfokus 80 und des Abregungsfokus 82 bewirkt, dass das anregungswirksame Lichtblatt gleichsam dünner wird, wodurch die räumliche Auflösung erhöht wird.

### Bezugszeichenliste

- 10: Beleuchtungsoptik
- 12: Beleuchtungslichtstrahl
- 14: Eintrittspupille
- 16: Beleuchtungsfokus
- 18: Lichtblatt
- 20: Laserlichtquelle
- 22: Spiegel
- 24: Spiegelanordnung
- 26: Abtastlinse
- 28: Tubuslinse
- 30: Antrieb
- 32: Steuereinheit
- 33: Abtastvorrichtung
- 34: Objektträger
- 36: Objekt
- 38: Beobachtungsobjektiv
- 40: Tubuslinse
- 42: Lichtdetektor
- 44: Lichtempfangsfläche
- 46: Detektionseinheit
- 47: Antrieb
- 50: planparallele Platte
- 51: Schwenkachse
- 52: Blendenplatte
- 54: Blendenöffnung
- 60: keilförmige Platte
- 61: Anregungslichtquelle
- 62: Anregungslichtstrahl
- 64: Abregungslichtquelle
- 66: Abregungslichtstrahl
- 68: Phasenplatte
- 70: Blende
- 72: Spiegel
- 74: Strahlteiler
- 76: Blende
- 80: Anregungsfokus
- 82: Abregungsfokus
- 84: Beleuchtungsfokus
- 86: Bewegungsebene
- 88: Einengungsrichtung

## Patentansprüche

1. Abtastmikroskop (100, 200, 300, 400, 500) mit
einer Lichtquelle (20, 61, 64) zum Aussenden eines Beleuchtungslichtstrahls (12),
einer Beleuchtungsoptik (10) zum Erzeugen eines länglichen Beleuchtungsfokus (16, 84) in einem abzubildenden Objekt (36), und
einem von der Beleuchtungsoptik (10) räumlich getrennten Beobachtungsobjektiv (38), das mit seiner optischen Achse (O₃) im Wesentlichen senkrecht zu einem beleuchteten Zielbereich des abzubildenden Objektes (36) angeordnet ist,
**gekennzeichnet durch** eine Abtastvorrichtung (33) zum Bewegen des Beleuchtungsfokus (16, 84) über den zu beleuchtenden Zielbereich des abzubildenden Objektes (36) **durch** Ändern der Einfallsrichtung, in der der Beleuchtungslichtstrahl (12) in eine Eintrittspupille (14) der Beleuchtungsoptik (10) fällt, wobei
die Abtastvorrichtung (33) den Beleuchtungslichtstrahl (12) zum Schrägstellen des Beleuchtungsfokus (16, 84) relativ zur optischen Achse (O₁) der Beleuchtungsoptik (10) auf einen aus der Pupillenmitte versetzten Teilbereich der Eintrittspupille (14) der Beleuchtungsoptik (10) richtet und zum Bewegen des Beleuchtungsfokus (16, 84) über den zu beleuchtenden Zielbereich die Einfallsrichtung des Beleuchtungslichtstrahls (12) innerhalb dieses Teilbereichs ändert,
die Abtastvorrichtung (33) die Einfallsrichtung des Beleuchtungslichtstrahls (12) zur Erzeugung eines **durch** den bewegten Beleuchtungsfokus (16, 84) gebildeten, zur optischen Achse (O₁) der Beleuchtungsoptik (10) schräg gestellten Lichtblattes (18) innerhalb einer Einfallsebene ändert, die zur optischen Achse (O₁) der Beleuchtungsoptik (10) parallel versetzt ist,
das Beobachtungsobjektiv (38) mit seiner optischen Achse (O₃) unter einem spitzen Winkel (α) zur optischen Achse (O₁) der Beleuchtungsoptik (10) angeordnet ist,
die Abtastvorrichtung (33) eine Steuereinheit (32) sowie eine mit der Steuereinheit (32) gekoppelte erste Stelleinheit (30, 50, 52, 60) zum Variieren der Schrägstellung des Lichtblattes (18) und eine mit der Steuereinheit (32) gekoppelte zweite Stelleinheit (47) zum Bewegen des Beobachtungsobjektivs (38) umfasst, und
die Steuereinheit (32) die beiden Stelleinheiten (30, 50, 52, 60; 47) aufeinander abgestimmt so ansteuert, dass das Beobachtungsobjektiv (38) mit seiner optischen Achse (O₃) senkrecht auf dem **durch** die erste Stelleinheit (30, 50, 52, 60) verstellten Lichtblatt (18) ausgerichtet bleibt.

2. Abtastmikroskop (100) nach Anspruch 1, **dadurch gekennzeichnet, dass**
die Beleuchtungsoptik (10) längs einer senkrecht zu ihrer optischen Achse (O₁) liegenden Verstellrichtung (A) beweglich geführt ist, und
die erste Stelleinheit einen Antrieb (30) umfasst, der die Beleuchtungsoptik (10) zum Variieren der Schrägstellung des Lichtblattes (18) längs der Verstellrichtung (A) bewegt.

3. Abtastmikroskop (200, 300) nach Anspruch 1, **dadurch gekennzeichnet, dass** die erste Stelleinheit umfasst:
ein in dem Lichtweg des Beleuchtungslichtstrahls (12) zwischen der Lichtquelle (20) und der Beleuchtungsoptik (10) angeordnetes, längs einer quer zur optischen Achse (O₁) der Beleuchtungsoptik (10) liegenden Verstellrichtung (A, C, D) beweglich geführtes optisches Versatzelement (50, 60), durch das die Einfallsebene des Beleuchtungslichtstrahls (12) parallel zur optischen Achse (O₁) der Beleuchtungsoptik (10) versetzt ist, und
einen Antrieb (30), der das Versatzelement (50, 60) zum Variieren der Schrägstellung des Lichtblattes (18) längs der Verstellrichtung (A, C, D) bewegt.

4. Abtastmikroskop (200, 300) nach Anspruch 3, **dadurch gekennzeichnet, dass** das optische Versatzelement eine transparente, planparallele oder keilförmige Platte (50, 60) ist.

5. Abtastmikroskop (400) nach einem der vorhergehenden Ansprüche, **dadurch gekennzeichnet, dass** die erste Stelleinheit umfasst:
eine im Bereich der Eintrittspupille (14) der Beleuchtungsoptik (10) angeordnete Blende (52), die eine den Beleuchtungslichtstrahl (12) zum Teil durchlassende Blendenöffnung (54) aufweist und längs einer senkrecht zur optischen Achse (O₁) der Beleuchtungsoptik (10) liegenden Verstellrichtung (A) beweglich geführt ist, und
einen Antrieb (30), der die Blende (52) zum Variieren der Schrägstellung des Lichtblattes (18) längs der Verstellrichtung (A) bewegt.

6. Abtastmikroskop (100, 200, 300, 400, 500) nach einem der vorhergehenden Ansprüche, **gekennzeichnet durch** einen Lichtdetektor (42), der mit dem Beobachtungsobjektiv (38) eine Detektionseinheit (46) bildet, die mittels der zweiten Stelleinheit (47) bewegbar ist.

7. Abtastmikroskop (100, 200, 300, 400, 500) nach einem der vorhergehenden Ansprüche, **dadurch gekennzeichnet, dass** die Abtastvorrichtung (33) eine Spiegelanordnung (24), der den von der Lichtquelle (20, 61, 64) ausgesendeten Beleuchtungslichtstrahl (12) in den aus der Pupillenmitte versetzten Teilbereich der Eintrittspupille (14) reflektiert, und einen Spiegelantrieb aufweist, durch den die Spiegelanordnung zum Verändern der Einfallsrichtung des Beleuchtungslichtstrahl (12) bewegbar ist.

8. Abtastmikroskop (100, 200, 300, 400, 500) nach einem der vorhergehenden Ansprüche, **dadurch gekennzeichnet, dass**
der von dem Beleuchtungslichtstrahl (12) durchsetzte Teilbereich der Eintrittspupille (14) der Beleuchtungsoptik (10) etwa 0,1 % bis 50 % der Gesamtfläche der Eintrittspupille (14) einnimmt, und
der Parallelversatz der Einfallsebene gegenüber der optischen Achse (O₁) der Beleuchtungsoptik (10) etwa 4 bis 96 % des Radius der Eintrittspupille (14) beträgt.

9. Abtastmikroskop (500) nach der vorhergehenden Ansprüche, **dadurch gekennzeichnet, dass**
der Beleuchtungslichtstrahl (12) aus einem Anregungslichtstrahl (62) und einem Abregungslichtstrahl (66) zusammengesetzt ist, die vor Eintritt in die Abtastvorrichtung (33) einander überlagert sind, und
die Beleuchtungsoptik (10) aus dem Anregungslichtstrahl (62) einen Anregungsfokus (80) und aus dem Abregungslichtstrahl (66) einen Abregungsfokus (82) erzeugt, die einander zu dem Beleuchtungsfokus (84) überlagert sind.

10. Abtastmikroskop (500) nach Anspruch 9, **dadurch gekennzeichnet, dass** der Abregungsfokus (82) eine räumliche Lichtintensitätsverteilung hat, die in einer Ebene (86), in welcher der aus dem Anregungsfokus (80) und dem Abregungsfokus (82) zusammengesetzte Beleuchtungsfokus (84) zur Erzeugung eines Lichtblattes (18) bewegt wird, ein Minimum und beiderseits dieser Ebene (86) jeweils ein Maximum aufweist.

11. Verfahren zur lichtmikroskopischen Abbildung eines Objektes (36), mit folgenden Schritten:
Aussenden eines Beleuchtungslichtstrahls (12),
Erzeugen eines länglichen Beleuchtungsfokus (16, 84) in dem abzubildenden Objekt (36) mittels einer Beleuchtungsoptik (10),
Bewegen des Beleuchtungsfokus (16, 84) über einen zu beleuchtenden Zielbereich des Objektes (36) durch Ändern der Einfallsrichtung, in der der Beleuchtungslichtstrahl (12) in eine Eintrittspupille (14) der Beleuchtungsoptik (10) fällt,
wobei
der Beleuchtungslichtstrahl (12) zum Schrägstellen des Beleuchtungsfokus (16, 84) relativ zur optischen Achse (O₁) der Beleuchtungsoptik (10) auf einen aus der Pupillenmitte versetzten Teilbereich der Eintrittspupille (14) gerichtet wird und zum Bewegen des Beleuchtungsfokus (16, 84) über den zu beleuchtenden Zielbereich die Einfallsrichtung des Beleuchtungslichtstrahls (12) innerhalb dieses Teilbereichs geändert wird,
der mit dem schräg gestellten Beleuchtungsfokus (16, 84) beleuchtete Zielbereich durch ein von der Beleuchtungsoptik (10) räumlich getrenntes Beobachtungsobjektiv (38) abgebildet wird, das mit seiner optischen Achse (O₃) im Wesentlichen senkrecht zu dem beleuchteten Zielbereich und unter einem spitzen Winkel (α) zur optischen Achse (O₁) der Beleuchtungsoptik (10) angeordnet ist,
die Einfallsrichtung des Beleuchtungslichtstrahls (12) zur Erzeugung eines durch den bewegten Beleuchtungsfokus (16, 84) gebildeten Lichtblattes (18) innerhalb einer Einfallsebene geändert wird, die zur optischen Achse (O₁) der Beleuchtungsoptik (10) parallel versetzt ist,
die optische Achse (O₃) des Beobachtungsobjektivs (38) senkrecht zu dem Lichtblatt (18) angeordnet wird, und
die Schrägstellung des Lichtblattes (18) variiert und das Beobachtungsobjektiv (38) in Abstimmung auf diese Variation derSchrägstellung des Lichtblattes (18) so bewegt wird, dass das Beobachtungsobjektiv (38) mit seiner optischen Achse (O₃) senkrecht auf dem verstellten Lichtblatt (18) ausgerichtet bleibt.

12. Verfahren nach Anspruch 11, **dadurch gekennzeichnet, dass** die das Beobachtungsobjektiv (38) gemeinsam mit einem Lichtdetektor (42) bewegt wird.

13. Verfahren nach Ansprüche 11 oder 12, **dadurch gekennzeichnet, dass**
der Beleuchtungslichtstrahl (12) aus einem Anregungslichtstrahl (62) und einem Abregungslichtstrahl (66) zusammengesetzt wird, und
aus dem Anregungslichtstrahl (62) ein Anregungsfokus (80) und aus dem Abregungslichtstrahl (66) ein Abregungsfokus (82) erzeugt wird, die einander zu dem Beleuchtungsfokus (84) überlagert werden.

14. Verfahren nach Anspruch 13, **dadurch gekennzeichnet, dass** die räumliche Intensitätsverteilung des Abregungsfokus (82) derart eingestellt wird, dass sie in einer Ebene (86), in welcher der aus dem Anregungsfokus (80) und dem Abregungsfokus (82) zusammengesetzte Beleuchtungsfokus (84) zur Erzeugung eines Lichtblattes (18) bewegt wird, ein Minimum und beiderseits dieser Ebene (86) jeweils ein Maximum aufweist.

## Claims

1. A scanning microscope (100, 200, 300, 400, 500), comprising:
a light source (20, 61, 64) for emitting an illuminating light beam (12), illumination optics (10) for producing an elongated illumination focus (16, 84) in an object (36) to be imaged, and
an observation objective (38) spatially separated from the illumination optics (10), which is disposed with its optical axis (O₃) substantially perpendicular to an illuminated target region of the object (36) to be imaged,
**characterized by** a scanning device (33) for moving the illumination focus (16, 84) across the target region to be illuminated of the object (36) to be imaged by varying the direction of incidence in which the illuminating light beam (12) enters an entrance pupil (14) of the illumination optics (10), wherein
in order to incline the illumination focus (16, 84) relative to the optical axis (O₁) of the illumination optics (10), the scanning device (33) directs the illuminating light beam (12) onto a portion of the entrance pupil (14) of the illumination optics (10) that is offset from the center of the pupil and, in order to move the illumination focus (16, 84) across the target region to be illuminated, the scanning device (33) varies the direction of incidence of the illuminating light beam (12) within said portion,
in order to produce a light sheet (18) which is formed by the moving illumination focus (16, 84) and is inclined relative to the optical axis (O₁) of the illumination optics (10), the scanning device (33) varies the direction of incidence of the illuminating light beam (12) in a plane of incidence which is parallel to and offset from the optical axis (O₁) of the illumination optics (10),
the observation objective (38) is disposed with its optical axis (O₃) at an acute angle (α) to the optical axis (O₁) of the illumination optics (10),
the scanning device (33) includes a control unit (32) and a first adjustment unit (30, 50, 52, 60) coupled to the control unit (32) for varying the inclination of the light sheet (18), as well as a second adjustment unit (47) coupled to the control unit (32) for moving the observation objective (38), and
the control unit (32) controls the two adjustment units (30, 50, 52, 60, 47) in a synchronized manner such that the observation objective (38) with its optical axis (03) remains oriented perpendicular to the light sheet (18) adjusted by the first adjustment unit (30, 50, 52, 60).

2. The scanning microscope (100) according to claim 1, **characterized in that**
the illumination optics (10) is movably guided along an adjustment direction (A) perpendicular to its optical axis (O₁), and
the first adjustment unit includes an actuator (30) which moves the illumination optics (10) along the adjustment direction (A) to vary the inclination of the light sheet (18).

3. The scanning microscope (200, 300) according to claim 1, **characterized in that** the first adjustment unit includes:
an optical displacement element (50, 60) which is disposed in the light path of the illuminating light beam (12) between the light source (20) and the illumination optics (10) and is movably guided along an adjustment direction (A, C, D) transverse to the optical axis (O1) of the illumination optics (10) by means of which the plane of incidence of the illuminating light beam (12) is displaced parallel to the optical axis (O1) of the illumination optics (10), and
an actuator (30) which moves the displacement element (50, 60) along the adjustment direction (A, C, D) to vary the inclination of the light sheet (18).

4. The scanning microscope (200, 300) according to claim 3, **characterized in that** the optical displacement element is a transparent, plane-parallel or wedge-shaped plate (50, 60).

5. The scanning microscope (400) according to one of the preceding claims, **characterized in that** the first adjustment unit includes:
an aperture (52) disposed in the region of the entrance pupil (14) of the illumination optics (10), which has an aperture opening (54) allowing a portion of the illuminating light beam (12) to pass therethrough, and which is guided movably along an adjustment direction (A) perpendicular to the optical axis (01) of the illumination optics (10), and an actuator (30) which moves the aperture (52) along the adjustment direction (A) to vary the inclination of the light sheet (18).

6. The scanning microscope (100, 200, 300, 400, 500) according to one of the preceding claims, **characterized by** a photodetector (42) which, together with the observation objective (38), forms a detection unit (46) which is movable by the second adjustment unit (47).

7. The scanning microscope (100, 200, 300, 400, 500) according to one of the preceding claims, **characterized in that** the scanning device (33) has a mirror system (24) which reflects the illuminating light beam (12) emitted by the light source (20, 61, 64) onto the portion of the entrance pupil (14) that is offset from the center of the pupil, and a mirror actuator by means of which the mirror system is movable in order to vary the direction of incidence of the illuminating light beam (12).

8. The scanning microscope (100, 200, 300, 400, 500) according to one of the preceding claims, **characterized in that**
the portion of the entrance pupil (14) of the illumination optics (10) that is traversed by the illuminating light beam (12) occupies about 0.1% to 50% of the total area of the entrance pupil (14), and
the parallel displacement of the plane of incidence with respect to the optical axis (O1) of the illumination optics (10) is about 4 to 96% of the radius of the entrance pupil (14).

9. The scanning microscope (500) according to one of the preceding claims, **characterized in that**
the illuminating light beam (12) is composed of an excitation beam (62) and a depletion beam (66), which are superimposed on each other before entering the scanning device (33), and
the illumination optics (10) produces an excitation focus (80) from the excitation beam (62) and a depletion focus (82) from the depletion beam (66), said excitation focus (80) and said depletion focus (82) being superimposed on each other to form the illumination focus (84).

10. The scanning microscope (500) according to claim 9, **characterized in that** the depletion focus (82) has a spatial light intensity distribution which exhibits a minimum in a plane (86) in which the illumination focus (84) composed of the excitation focus (80) and the depletion focus (82) is moved to generate a light sheet (18), as well as a maximum on both sides of said plane (86).

11. A method for light-microscopic imaging of an object (36), comprising the following steps:
emitting an illuminating light beam (12),
producing an elongated illumination focus (16, 84) in the object (36) to be imaged by means of illumination optics (10),
moving the illumination focus (16, 84) across a target region to be illuminated of the object (36) by varying the direction of incidence in which the illuminating light beam (12) enters an entrance pupil (14) of the illumination optics (10),
wherein
in order to incline the illumination focus (16, 84) relative to the optical axis (01) of the illumination optics (10), the illuminating light beam (12) is directed onto a portion of the entrance pupil (14) that is offset from the center of the pupil and, in order to move the illumination focus (16, 84) across the target region to be illuminated, the direction of incidence of the illuminating light beam (12) is varied within said portion,
the target region illuminated with the inclined illumination focus (16, 84) is imaged by an observation objective (38) which is spatially separated from the illumination optics (10), which observation objective (38) is disposed with its optical axis (03) substantially perpendicular to the illuminated target region and at an acute angle (α) to the optical axis (O1) of the illumination optics (10),
in order to produce a light sheet (18) which is formed by the moving illumination focus (16, 84), the direction of incidence of the illuminating light beam (12) is varied in a plane of incidence which is parallel to and
offset from the optical axis (O1) of the illumination optics (10),
the optical axis (03) of the observation objective (38) is disposed perpendicular to the light sheet (18), and
the inclination of the light sheet (18) varies, and the observation objective (38) is moved in synchronization with this variation in the inclination of the light sheet (18) such that the observation objective (38) remains oriented with its optical axis (03) perpendicular to the adjusted light sheet (18).

12. The method according to claim 11, **characterized in that** the observation objective (38) is moved together with a photodetector (42).

13. The method according to one of the claims 11 or 12, **characterized in that**
the illuminating light beam (12) is composed of an excitation beam (62) and a depletion beam (66), and
an excitation focus (80) is produced from the excitation beam (62) and a depletion focus (82) is produced from the depletion beam (66), said excitation focus (80) and said depletion focus (82) being superimposed on each other to form the illumination focus (84).

14. The method according to claim 13, **characterized in that** the spatial intensity distribution of the depletion focus (82) is adjusted such that it exhibits a minimum in a plane (86) in which the illumination focus (84) composed of the excitation focus (80) and the depletion focus (82) is moved to generate a light sheet (18), as well as a maximum on both sides of said plane (86).

## Revendications

1. Microscope à balayage (100, 200, 300, 400, 500), comprenant
une source de lumière (20, 61, 64) destinée à émettre un faisceau de lumière d'éclairage (12),
une optique d'éclairage (10) destinée à produire un foyer d'éclairage allongé (16, 84) dans un objet (36) à représenter, et
un objectif d'observation (38) séparé dans l'espace de l'optique d'éclairage (10) et disposé, avec son axe optique (O₃), sensiblement perpendiculairement à une zone cible éclairée de l'objet (36) à représenter,
**caractérisé par** un dispositif de balayage (33) destiné à déplacer le foyer d'éclairage (16, 84) au-dessus de la zone cible à éclairer de l'objet (36) à représenter, par modification de la direction d'incidence dans laquelle le faisceau lumineux d'éclairage (12) est incident dans une pupille d'entrée (14) de l'optique d'éclairage (10),
le dispositif de balayage (33), orientant le faisceau lumineux d'éclairage (12) sur une partie de la pupille d'entrée (14) de l'optique d'éclairage (10), qui est décalée du centre de la pupille afin d'incliner le foyer d'éclairage (16, 84) par rapport à l'axe optique (O₁) de l'optique d'éclairage (10), et afin de déplacer le foyer d'éclairage (16, 84) au-dessus de la zone cible à éclairer, modifiant la direction d'incidence du faisceau lumineux d'éclairage (12) à l'intérieur de cette partie,
le dispositif de balayage (33) modifiant la direction d'incidence du faisceau lumineux d'éclairage (12) pour produire une feuille de lumière (18) formée par le foyer d'éclairage (16, 84) déplacé et inclinée par rapport à l'axe optique (O₁) de l'optique d'éclairage (10) à l'intérieur d'un plan d'incidence qui est décalé parallèlement à l'axe optique (O₁) de l'optique d'éclairage (10),
l'objectif d'observation (38), avec son axe optique (O₃), étant disposé de manière à former un angle aigu (α) par rapport à l'axe optique (O₁) de l'optique d'éclairage (10),
le dispositif de balayage (33) comprenant une unité de commande (32) et une première unité de déplacement (30, 50, 52, 60) couplée à l'unité de commande (32) et destinée à modifier l'inclinaison de la feuille de lumière (18) et une seconde unité de déplacement (47) couplée à l'unité de commande (32) et destinée à déplacer l'objectif d'observation (38), et
l'unité de commande (32) commandant les deux unités de déplacement (30, 50, 52, 60 ; 47) d'une manière adaptée l'une à l'autre, de telle manière que l'objectif d'observation (38), avec son axe optique (03), reste orienté perpendiculairement à la feuille de lumière (18) déplacée par la première unité de déplacement (30, 50, 52, 60).

2. Microscope à balayage (100) selon la revendication 1, **caractérisé en ce que**
l'optique d'éclairage (10) est guidée mobile le long d'une direction de déplacement (A) perpendiculaire à son axe optique (O₁), et
la première unité de déplacement comprend un entraînement (30) qui déplace l'optique d'éclairage (10) le long de la direction de déplacement (A) pour modifier l'inclinaison de la feuille de lumière (18).

3. Microscope à balayage (200, 300) selon la revendication 1, **caractérisé en ce que** la première unité de déplacement comprend :
un élément de décalage optique (50, 60) disposé dans le trajet du faisceau lumineux d'éclairage (12) entre la source de lumière (20) et l'optique d'éclairage (10), guidé mobile le long d'une direction de déplacement (A, C, D) transversale à l'axe optique (O1) de l'optique d'éclairage (10), et permettant le décalage du plan d'incidence du faisceau lumineux d'éclairage (12) parallèlement à l'axe optique (O1) de l'optique d'éclairage (10), et
un entraînement (30) déplaçant l'élément de décalage (50, 60) le long de la direction de déplacement (A, C, D) pour modifier l'inclinaison de la feuille de lumière (18).

4. Microscope à balayage (200, 300) selon la revendication 3, **caractérisé en ce que** l'élément de décalage optique est une plaque (50, 60) transparente, à faces planes et parallèles ou cunéiforme.

5. Microscope à balayage (400) selon l'une quelconque des revendications précédentes, **caractérisé en ce que** la première unité de déplacement comprend :
un diaphragme (52) disposé dans la zone de la pupille d'entrée (14) de l'optique d'éclairage (10), comprenant une ouverture (54) laissant en partie passer le faisceau lumineux d'éclairage (12) et guidé mobile le long d'une direction de déplacement (A) perpendiculaire à l'axe optique (O1) de l'optique d'éclairage (10), et
un entraînement (30) qui déplace le diaphragme (52) le long de la direction de déplacement (A) pour modifier l'inclinaison de la feuille de lumière (18).

6. Microscope à balayage (100, 200, 300, 400, 500) selon l'une quelconque des revendications précédentes, **caractérisé par** un détecteur de lumière (42), qui forme avec l'objectif d'observation (38) une unité de détection (46), laquelle est mobile au moyen de la seconde unité de déplacement (47).

7. Microscope à balayage (100, 200, 300, 400, 500) selon l'une quelconque des revendications précédentes, **caractérisé en ce que** le dispositif de balayage (33) comprend un ensemble de miroirs (24), lequel réfléchit le faisceau lumineux d'éclairage (12) émis par la source de lumière (20, 61, 64) dans la partie de la pupille d'entrée (14) qui est décalée du centre de la pupille, et comprend un entraînement de miroirs permettant de déplacer l'ensemble de miroirs pour modifier la direction d'incidence du faisceau lumineux d'éclairage (12).

8. Microscope à balayage (100, 200, 300, 400, 500) selon l'une quelconque des revendications précédentes, **caractérisé en ce que**
la partie, traversée par le faisceau lumineux d'éclairage (12), de la pupille d'entrée (14) de l'optique d'éclairage (10) occupe sensiblement 0,1 % à 50 % de la surface totale de la pupille d'entrée (14), et
le décalage parallèle entre le plan d'incidence et l'axe optique (O1) de l'optique d'éclairage (10) atteint sensiblement 4 à 96 % du rayon de la pupille d'entrée (14).

9. Microscope à balayage (500) selon l'une quelconque des revendications précédentes, **caractérisé en ce que**
le faisceau lumineux d'éclairage (12) est composé d'un faisceau lumineux d'excitation (62) et d'un faisceau lumineux de désexcitation (66), lesquels sont superposés avant d'entrer dans le dispositif de balayage (33), et
l'optique d'éclairage (10) produit, à partir du faisceau lumineux d'excitation (62), un foyer d'excitation (80) et, à partir du faisceau lumineux de désexcitation (82), un foyer de désexcitation (82), lesquels foyers sont superposés pour obtenir le foyer d'éclairage (84).

10. Microscope à balayage (500) selon la revendication 9, **caractérisé en ce que** le foyer d'excitation (82) présente une répartition spatiale de l'intensité lumineuse, laquelle, dans un plan (86) dans lequel le foyer d'éclairage (84) composé du foyer d'excitation (80) et du foyer de désexcitation (82) est déplacé pour produire une feuille de lumière (18), présente un minimum et, de part et d'autre de ce plan (86), respectivement un maximum.

11. Procédé de représentation au microscope optique d'un objet (36), comprenant les étapes suivantes :
l'émission d'un faisceau lumineux d'éclairage (12),
la production d'un foyer d'éclairage allongé (16, 84) dans l'objet (36) à représenter au moyen d'une optique d'éclairage (10),
le déplacement du foyer d'éclairage (16, 84) au-dessus d'une zone cible à éclairer de l'objet (36) par modification de la direction d'incidence, dans laquelle le faisceau lumineux d'éclairage (12) est incident dans une pupille d'entrée (14) de l'optique d'éclairage (10),
le faisceau lumineux d'éclairage (12), pour incliner le foyer d'éclairage (16, 84) par rapport à l'axe optique (01) de l'optique d'éclairage (10), étant orienté sur une partie, décalée du centre de la pupille, de la pupille d'entrée (14) et, pour déplacer le foyer d'éclairage (16, 84) au-dessus de la zone cible à éclairer, la direction d'incidence du faisceau lumineux d'éclairage (12) à l'intérieur de cette partie étant modifiée,
la zone cible éclairée au moyen du foyer d'éclairage (16, 84) incliné étant représentée par un objectif d'observation (38) séparé dans l'espace de l'optique d'éclairage (10), lequel objectif est disposé, avec son axe optique (03), sensiblement perpendiculairement à la zone cible éclairée et en formant un angle aigu (α) par rapport à l'axe optique (O1) de l'optique d'éclairage (10),
la direction d'incidence du faisceau lumineux d'éclairage (12), pour produire une feuille de lumière (18) formée par le foyer d'éclairage (16, 84) déplacé, étant modifiée à l'intérieur d'un plan d'incidence qui est décalé parallèlement à l'axe optique (O1) de l'optique d'éclairage (10),
l'axe optique (03) de l'objectif d'observation (38) étant perpendiculaire à la feuille de lumière (18), et
l'inclinaison de la feuille de lumière (18) variant et l'objectif d'observation (38) étant déplacé en fonction de cette variation de l'inclinaison de la feuille de lumière (18), de telle manière que l'objectif d'observation (38), avec son axe optique (03), reste perpendiculaire à la feuille de lumière (18) déplacée.

12. Procédé selon la revendication 11, **caractérisé en ce que** l'objectif d'observation (38) est déplacé conjointement avec un détecteur de lumière (42).

13. Procédé selon la revendication 11 ou 12, **caractérisé en ce que**
le faisceau lumineux d'éclairage (12) est composé d'un faisceau lumineux d'excitation (62) et d'un faisceau lumineux de désexcitation (66), et
un foyer d'excitation (80) est produit à partir du faisceau lumineux d'excitation (62) et un foyer de désexcitation (82) est produit à partir du faisceau lumineux de désexcitation (66), lesquels foyers sont superposés pour obtenir le foyer d'éclairage (84).

14. Procédé selon la revendication 13, **caractérisé en ce que** la répartition d'intensité spatiale du foyer de désexcitation (82) est réglée de telle manière que, dans un plan (86) dans lequel le foyer d'éclairage (84) composé du foyer d'excitation (80) et du foyer de désexcitation (82) est déplacé pour produire une feuille de lumière (18), elle présente un minimum et, de part et d'autre de ce plan (86), respectivement un maximum.
